# EUROPEAN PATENT SPECIFICATION

(11) **EP 3 780 766 B1**
(45) Date of publication and mention of the grant of the patent: **02.12.2026**
(21) Application number: 19785539.8
(22) Date of filing: 28.03.2019
(51) Int. Cl.: H04W 52/02, H04W 72/04

(54) **METHOD FOR MONITORING PHYSICAL DOWNLINK CONTROL CHANNEL, USER EQUIPMENT, AND NETWORK SIDE DEVICE**
VERFAHREN ZUR ÜBERWACHUNG EINES PHYSIKALISCHEN DOWNLINK-STEUERKANALS, BENUTZERGERÄT UND NETZWERKSEITIGE VORRICHTUNG
PROCÉDÉ DE SURVEILLANCE DE CANAL DE COMMANDE DE LIAISON DESCENDANTE, ÉQUIPEMENT UTILISATEUR ET DISPOSITIF CÔTÉ RÉSEAU

(30) Priority: 13.04.2018 CN 201810333779
(43) Date of publication of application: 17.02.2021
(73) Proprietor: Vivo Mobile Communication Co., Ltd., Dongguan, Guangdong 523860 (CN)
(72) Inventor: JIANG, Dajie, Dongguan, Guangdong 523860 (CN); WU, Kai, Dongguan, Guangdong 523860 (CN); PAN, Xueming, Dongguan, Guangdong 523860 (CN)
(74) Representative: Lavoix
(86) International application number: PCT/CN2019/080100
(87) International publication number: WO 2019/196663

(56) References cited:
- EP-A1- 2 871 883
- EP-B1- 2 871 883
- CN-A- 101 795 461
- CN-A- 102 821 479
- US-A1- 2015 305 029
- ZTE ET AL: "Power consumption reduction for physical channels for MTC", vol. RAN WG1, no. Prague,CZ; 20171013, 30 September 2017 (2017-09-30), XP051351809, Retrieved from the Internet <URL:http://www.3gpp.org/ftp/tsg_ran/WG1_RL1/TSGR1_90b/Docs/> [retrieved on 20170930]

## Description

### TECHNICAL FIELD

The present disclosure relates to the field of communications technology, in particular to a physical downlink control channel (Physical Downlink Control Channel, PDCCH) monitoring method, a user equipment (User Equipment, UE), and a network side device.

### BACKGROUND

Currently, in a long term evolution (Long Term Evolution, LTE) technology and a fifth-generation (Fifth-Generation, 5G) new radio (New Radio, NR) technology, PDCCH blind detection is usually performed by a user equipment (User Equipment, UE) within each subframe or slot. Upon the receipt of a PDCCH belonging to the UE, the UE may receive downlink data or transmit uplink data on a time-frequency resource indicated in the PDCCH. When the PDCCH belonging to the UE fails to be received, the UE may continue to perform the PDCCH blind detection within a next subframe or slot, or within a subframe or slot that meets a PDCCH monitoring periodicity and an offset value configured by a base station.

For many popular services such as Wechat and web browser, an arrival time of a service packet is random or non-uniform. In an actual network, when the UE is in an activated state and monitors the PDCCH continuously, the UE fails to receive the PDCCH for scheduling the UE within all subframes or slots. A behavior of performing, by the UE, the PDCCH blind detection within the slots or subframes without the PDCCH for scheduling the UE may lead to additional power consumption for the UE. Hence, there is an urgent need to solve the above-mentioned problem.

EP 2871883 A1 discloses a DCI transmission method and device under cross-band carrier aggregation. Furthermore, 3GPP Draft R1-1717210, ZTE, discloses a method for wireless communication at a user equipment (UE) relating to PDCCH monitoring reductions to save power. It discloses utilizing DCI to indicate to a UE to skip PDCCH decoding/ monitoring for a certain number of subsequent slots.

### SUMMARY

The scope of the present invention is determined only by the scope of the appended claims. More precisely, in one aspect, the present disclosure provides a PDCCH monitoring method according to claim 1 and further detailed in the dependent claims referring back to this claim.

Furthermore, in another aspect, the present disclosure provides a PDCCH configuration method according to claim 9.

Furthermore, in yet another aspect, the present disclosure provides a user equipment according to claim 10 and further detailed in the dependent claims referring back to this claim.

Furthermore, in yet another aspect, the present disclosure provides a network side device according to claim 15.

### BRIEF DESCRIPTION OF THE DRAWINGS

Through reading the detailed description hereinafter, the other advantages and benefits will be apparent to a person skilled in the art. The drawings are merely used to show the preferred embodiments, but shall not be construed as limiting the present disclosure. In addition, in the drawings, same reference symbols represent same members. In these drawings,
Fig. 1 is a schematic view showing architecture of a wireless communications system according to one embodiment of the present disclosure;
Fig. 2 is a flow chart of a PDCCH monitoring method according to one embodiment of the present disclosure;
Fig. 3 is a flow chart of a PDCCH configuration method according to one embodiment of the present disclosure;
Fig. 4 is a schematic view showing a UE according to one embodiment of the present disclosure;
Fig. 5 is a schematic view showing a network side device according to one embodiment of the present disclosure;
Fig. 6 is another schematic view showing the UE according to one embodiment of the present disclosure; and
Fig. 7 is another showing the network side device according to one embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure as defined by the appended claims.

Such terms as "include" or "including" or any other variations involved in the specification and the appended claims intend to provide non-exclusive coverage, so that a procedure, method, system, product or device including a series of steps or units may also include any other elements not listed herein, or may include any inherent steps or units of the procedure, method, system, product or device. In addition, the expression "and/or" is merely used to describe the relationship between objects, and it may include three situations. For example, "A and/or B" may represent that, there is only A, there are both A and B, and there is only B.

In the embodiments of the present disclosure, such expressions as "illustratively" and "for example" are merely used to show examples or explanations. Any illustrative embodiment or scheme in the embodiments of the present disclosure shall not be construed as being superior over the other embodiment or scheme. Definitely, these words intend to exhibit relevant concepts in a concrete manner.

The present disclosure will be described hereinafter in conjunction with the drawings. A PDCCH monitoring method, a UE and a network side device involved in the embodiments of the present disclosure may be applied to a wireless communications system. The wireless communications system may be a 5G system, an evolved long term evolution (Evolved Long Term Evolution, eLTE) system, or a subsequently evolved communications system.

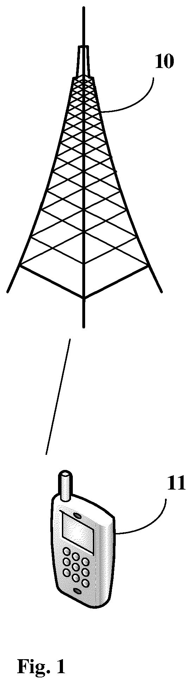

Fig. 1 is a schematic view showing architecture of a wireless communications system according to one embodiment of the present disclosure. As shown in Fig. 1, the wireless communications system may include a network side device 10 and a UE. For example, the UE may be marked as UE 11 which is capable of communicating with the network side device 10. In actual use, the devices may be connected to each other in a wireless manner. A solid line is used in Fig. 1 to conveniently and intuitively show a connection relationship between the devices.

It should be appreciated that, the communications system may include a plurality of UEs, and the network side device may communicate with the plurality of UEs (transmit signaling or data).

The network side device 10 in the embodiments of the present disclosure may be a base station. The base station may be a common base station, an evolved node base station (eNB), or a network side device (e.g., next generation node base station (gNB) or transmission and reception point (Transmission And Reception Point, TRP) or a cell in a 5G system.

The UE in the embodiments of the present disclosure may be a mobile point, a flat-panel computer, a laptop computer, an ultra-mobile personal computer (Ultra-Mobile Personal Computer, UMPC), a netbook, or a personal digital assistant (Personal Digital Assistant, PDA), etc.

It should be appreciated that, a slot involved in the context may be a normal slot, e.g., a normal slot consisting of 14 time-domain symbols, or a mini slot consisting of less than 14, e.g., 2, 4 or 7, time-domain symbols.

Of course, the slot involved in the context may also be a transmission time interval (Transmission Time Interval, TTI), a subframe, or a time-domain scheduling granularity.

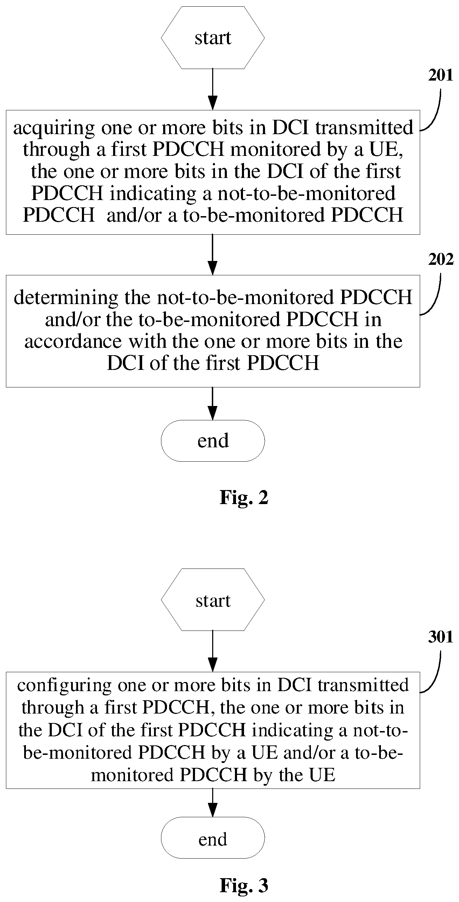

As shown in Fig. 2, the present disclosure provides in some embodiments a PDCCH monitoring method executed by a UE, which includes: Step 201 of acquiring one or more bits in DCI transmitted through a first PDCCH monitored by the UE, the one or more bits in the DCI transmitted through the first PDCCH indicating a not-to-be-monitored PDCCH and/or a to-be-monitored PDCCH; and Step 202 of determining the not-to-be-monitored PDCCH and/or the to-be-monitored PDCCH in accordance with the one or more bits in the DCI of the first PDCCH.

In the embodiments of the present disclosure, the method in Fig. 2 may further include receiving indication information from a network side device (e.g., a base station). The indication information may be used to indicate the UE to monitor the first PDCCH or indicate that the first PDCCH has been configured by the network side device for the UE, or the indication information may be used to indicate the UE not to monitor the first PDCCH or indicate that the first PDCCH has not been configured by the network side device for the UE.

In a possible embodiment of the present disclosure, the one or more bits in the DCI transmitted through the first PDCCH may be used to indicate the not-to-be-monitored PDCCH in at least one of the following modes 1 to 5.

Mode 1: the one or more bits in the DCI transmitted through the first PDCCH may be used to indicate the UE not to monitor, within subsequent N slots, a second PDCCH having a same DCI format as the first PDCCH or having a specific DCI format. It should be appreciated that, the specific DCI format may be a certain DCI format or some DCI formats. N is an integer greater than or equal to 1, and it may be configured by the network side device or predefined.

It should be appreciated that, a slot within which the first PDCCH has been monitored may be called as a current slot, and slots after the current slot may be the subsequent slots.

Mode 2: the one or more bits in the DCI transmitted through the first PDCCH may be used to indicate the UE not to monitor, within subsequent N slots, a third PDCCH having a same radio network temporary identity (Radio Network Temporary Identity, RNTI) as the first PDCCH or having a specific RNTI. It should be appreciated that, the specific RNTI may be a certain RNTI or some RNTIs. N is an integer greater than or equal to 1, and it may be configured by the network side device or predefined.

Mode 3: the one or more bits in the DCI transmitted through the first PDCCH may be used to indicate the UE not to monitor, within subsequent N slots, a fourth PDCCH having a same search space (Search Space, SS) as the first PDCCH or having a specific SS. It should be appreciated that, the specific SS may be a certain SS or some SSs. N is an integer greater than or equal to 1, and it may be configured by the network side device or predefined.

Mode 4: the one or more bits in the DCI transmitted through the first PDCCH may be used to indicate the UE not to monitor, within subsequent N slots, a fifth PDCCH having a same SS type as the first PDCCH or having a specific SS type. It should be appreciated that, the specific SS type may be a certain SS type or some SS types. N is an integer greater than or equal to 1, and it may be configured by the network side device or predefined.

Mode 5: the one or more bits in the DCI transmitted through the first PDCCH may be used to indicate the UE not to monitor, within subsequent N slots, a sixth PDCCH having a same control-resource set (Control-Resource Set, CORESET) as the PDCCH or having a specific CORESET. It should be appreciated that, the specific CORESET may be a certain CORESET or some CORESETs. N is an integer greater than or equal to 1, and it may be configured by the network side device or predefined.

In Mode 1, the one or more bits in the DCI transmitted through the first PDCCH may be used to indicate the UE not to monitor, within the subsequent N slots, the second PDCCH having the same DCI format as the first PDCCH or having the specific DCI format in at least one of the followings.
(a) The one or more bits in the DCI in a first DCI format or a second DCI format transmitted through the first PDCCH may be used to indicate the UE not to monitor, within the subsequent N slots, the second PDCCH having the first DCI format or the second DCI format. The first DCI format may be used to schedule physical uplink shared channels for one cell, and it may be DCI format 0_0. The second DCI format may be used to schedule physical downlink shared channels for one cell, and it may be DCI format 1_0. In other words, the PDCCH having at least one of DCI format 0_0 and DCI format 1_0 may not be monitored.
(b) The one or more bits in the DCI in the first DCI format or a third DCI format transmitted through the first PDCCH may be used to indicate the UE not to monitor, within the subsequent N slots, the third PDCCH having the first DCI format or the third DCI format. The first DCI format may be used to schedule physical uplink shared channels for one cell, and it may be DCI format 0_0. The third DCI format may be used to schedule physical uplink shared channels for one cell, and it may be DCI format 0_1. In other words, the UE may be indicated, through the DCI for uplink scheduling, not to monitor subsequent N pieces of DCI for uplink scheduling.
(c) The one or more bits in the DCI in the second DCI format or a fourth DCI format transmitted through the first PDCCH may be used to indicate the UE not to monitor, within the subsequent N slots, the second PDCCH having the second DCI format or the fourth DCI format. The second DCI format may be used to schedule physical downlink shared channels for one cell, and it may be DCI format 1_0. The fourth DCI format may be used to schedule physical downlink shared channels for one cell, and it may be DCI format 1_1. In other words, the UE may be indicated, through the DCI for downlink scheduling, not to monitor subsequent N pieces of DCI for downlink scheduling.
(d) The one or more bits in the DCI in the second DCI format or the fourth DCI format transmitted through the first PDCCH may be used to indicate the UE not to monitor, within the subsequent N slots, the second PDCCH having the first DCI format or the third DCI format. The second DCI format may be used to schedule physical downlink shared channels for one cell, and it may be DCI format 1_0. The fourth DCI format may be used to schedule physical downlink shared channels for one cell, and it may be DCI format 1_1. In other words, the UE may be indicated, through the DCI for downlink scheduling, not to monitor subsequent N pieces of DCI for uplink scheduling.
(e) The one or more bits in the DCI in the first DCI format or the third DCI format transmitted through the first PDCCH may be used to indicate the UE not to monitor, within the subsequent N slots, the second PDCCH having the second DCI format or the fourth DCI format. The first DCI format may be used to schedule physical uplink shared channels for one cell, and it may be DCI format 0_0. The second DCI format may be used to schedule physical downlink shared channels for one cell, and it may be DCI format 1_0. The third DCI format may be used to schedule physical uplink shared channels for one cell, and it may be DCI format 0_1. The fourth DCI format may be used to schedule physical downlink shared channels, and it may be DCI format 1_1. In other words, the UE may be indicated, through the DCI for uplink scheduling, not to monitor subsequent N pieces of DCI for downlink scheduling.
(f) The one or more bits in the DCI in the first DCI format, the second DCI format, the third DCI format or the fourth DCI format transmitted through the first PDCCH may be used to indicate the UE not to monitor, within the subsequent N slots, the second PDCCH having the first DCI format, the second DCI format, the third DCI format or the fourth DCI format. The first DCI format may be used to schedule physical uplink shared channels for one cell, and it may be DCI format 0_0. The second DCI format may be used to schedule physical downlink shared channels for one cell, and it may be DCI format 1_0. The third DCI format may be used to schedule physical uplink shared channels for one cell, and it may be DCI format 0_1. The fourth DCI format may be used to schedule physical downlink shared channels, and it may be DCI format 1_1. In other words, the UE may be indicated, through any DCI for data scheduling, not to monitor subsequent N pieces of DCI for data scheduling.
(g) The one or more bits in a fifth DCI format transmitted through the first PDCCH may be used to indicate the UE not to monitor, within the subsequent N slots, the second PDCCH having the fifth DCI format. The fifth DCI format may be used to notify a group of slot formats of the UE, and it may be DCI format 2_0. To be specific, slot format indication (Slot Format Indication, SFI) DCI may be used to indicate the UE not to monitor subsequent N pieces of SFI DCI. In other words, SFI in slots where the N pieces of SFI DCI are located may be indicated in accordance with a first piece of SFI DCI by default for the UE.

In a possible embodiment of the present disclosure, the subsequent N slots may refer to subsequent N slots which meet a monitoring periodicity and an offset value configured by the network side device, or subsequent N downlink slots which meet the monitoring periodicity and the offset value configured by the network side device.

In a possible embodiment of the present disclosure, the one or more bits in the DCI transmitted through the first PDCCH may be used to indicate the to-be-monitored PDCCH in at least one of the followings. The one or more bits in the DCI transmitted through the first PDCCH may be used to indicate the UE to monitor, within a first slot subsequent to the subsequent N slots, a seventh PDCCH having a same DCI format as the first PDCCH or having a specific DCI format. The one or more bits in the DCI transmitted through the first PDCCH may be used to indicate the UE to monitor, within the first slot subsequent to the subsequent N slots, an eighth PDCCH having a same RNTI as the first PDCCH or having a specific RNTI. The one or more bits in the DCI transmitted through the first PDCCH may be used to indicate the UE to monitor, within the first slot subsequent to the subsequent N slots, a ninth PDCCH having a same SS as the first PDCCH or having a specific SS. The one or more bits in the DCI transmitted through the first PDCCH may be used to indicate the UE to monitor, within the first slot subsequent to the subsequent N slots, a tenth PDCCH having a same SS type as the first PDCCH or having a specific SS type. The one or more bits in the DCI transmitted through the first PDCCH may be used to indicate the UE to monitor, within the first slot subsequent to the subsequent N slots, an eleventh PDCCH having a same CORESET as the first PDCCH or having a specific CORESET. N is an integer greater than or equal to 1.

In the embodiments of the present disclosure, the one or more bits in the DCI transmitted through the first PDCCH may be used to indicate the UE to monitor, within the first slot subsequent to the subsequent N slots, the seventh PDCCH having the same DCI format as the first PDCCH or having the specific DCI format in at least one of the followings. The one or more bits in the DCI in a first DCI format or a second DCI format transmitted through the first PDCCH may be used to indicate the UE to monitor, within the first slot subsequent to the subsequent N slots, the seventh PDCCH having the first DCI format or the second DCI format. The one or more bits in the DCI in the first DCI format or a third DCI format transmitted through the first PDCCH may be used to indicate the UE to monitor, within the first slot subsequent to the subsequent N slots, the seventh PDCCH having the first DCI format or the third DCI format. The one or more bits in the DCI in the second DCI format or a fourth DCI format transmitted through the first PDCCH may be used to indicate the UE to monitor, within the first slot subsequent to the subsequent N slots, the seventh PDCCH having the second DCI format or the fourth DCI format. The one or more bits in the DCI in the second DCI format or the fourth DCI format transmitted through the first PDCCH may be used to indicate the UE to monitor, within the first slot subsequent to the subsequent N slots, the seventh PDCCH having the first DCI format or the third DCI format. The one or more bits in the DCI in the first DCI format or the third DCI format transmitted through the first PDCCH may be used to indicate the UE to monitor, within the first slot subsequent to the subsequent N slots, the seventh PDCCH having the second DCI format or the fourth DCI format. The one or more bits in the DCI in the first DCI format, the second DCI format, the third DCI format or the fourth DCI format transmitted through the first PDCCH may be used to indicate the UE to monitor, within the first slot subsequent to the subsequent N slots, the seventh PDCCH having the first DCI format, the second DCI format, the third DCI format or the fourth DCI format. The one or more bits in the DCI in a fifth DCI format transmitted through the first PDCCH may be used to indicate the UE to monitor, within the first slot subsequent to the subsequent N slots, the seventh PDCCH having the fifth DCI format.

The first DCI format may be used to schedule physical uplink shared channels for one cell, and it may be DCI format 0_0. The second DCI format may be used to schedule physical downlink shared channels for one cell, and it may be DCI format 1_0. The third DCI format may be used to schedule physical uplink shared channels for one cell, and it may be DCI format 0_1. The fourth DCI format may be used to schedule physical downlink shared channels for one cell, and it may be DCI format 1_1. The fifth DCI format may be used to notify a group of slot formats of the UE, and it may be DCI format 2_0.

In a possible embodiment of the present disclosure, the first slot subsequent to the subsequent N slots may be a first slot that meets the monitoring periodicity and the offset value configured by the network side device subsequent to the subsequent N slots that meets the monitoring periodicity and the offset value configured by the network side device, or a first downlink slot that meets the monitoring periodicity and the offset value configured by the network side device subsequent to the subsequent N slots that meets the monitoring periodicity and the offset value configured by the network side device.

In a possible embodiment of the present disclosure, a conventional DCI format may be reused by the DCI, i.e., it may be achieved through changing a function of bits in the conventional DCI, or the DCI may be in a new DCI format, i.e., it may be achieved through designing a new DCI format.

In a possible embodiment of the present disclosure, when the one or more bits in the DCI transmitted through the first PDCCH indicates the to-be-monitored PDCCH, the one or more bits in the DCI transmitted through the first PDCCH may be used to indicate a default monitoring behavior of the UE for monitoring the PDCCH. Further, the default monitoring behavior may at least include monitoring, by the UE, the PDCCH within a next slot or downlink slot that meets the monitoring periodicity and the offset value configured by the network side device.

In Mode 2, the one or more bits in the DCI transmitted through the first PDCCH may be used to indicate the UE not to monitor, within the subsequent N slots, the third PDCCH having the same RNTI as the first PDCCH or having the specific RNTI.

For example, the one or more bits in the DCI transmitted through the third PDCCH having a first RNTI may be used to indicate the UE not to monitor, within the subsequent N slots, the third PDCCH having the first RNTI.

For another example, the one or more bits in the DCI transmitted through the third PDCCH having the first RNTI may be used to indicate the UE not to monitor, within the subsequent N slots, the third PDCCH having a second RNTI.

In the embodiments of the present disclosure, the RNTI may include any one of a cell-radio network temporary identifier (Cell-Radio Network Temporary Identifier, C-RNTI), a temporary cell-radio network temporary identifier (Temporary Cell-Radio Network Temporary Identifier, TC-RNTI), a system information-radio network temporary identifier (System Information-Cell Radio Network Temporary Identifier, SI-RNTI), a paging radio network temporary identifier (Paging-Radio Network Temporary Identifier, P-RNTI), a semi-persistent scheduling-radio network temporary identifier (Semi-Persistent Scheduling-Radio Network Temporary Identifier, SPS-RNTI), a configuration scheduling-radio network temporary identifier (Configuration Scheduling-Radio Network Temporary Identifier, CS-RNTI), an interrupt transfer radio network temporary identifier (Interrupt Transfer Radio Network Temporary Identifier, INT-RNTI), a transmission power control-sounding reference signal-radio network temporary identifier (Transmission Power Control-Sounding Reference Signal-Radio Network Temporary Identifier, TPC-SRS-RNTI), a transmission power control-physical uplink shared channel-radio network temporary identifier (Transmission Power Control-Physical Uplink Shared Channel-Radio Network Temporary Identifier, TPC-PUSCH-RNTI), a transmission power control-physical uplink control channel-radio network temporary identifier (Transmission Power Control-Physical Uplink Control Channel-Radio Network Temporary Identifier, TPC-PUCCH-RNTI), a semi-persistent-channel state information-radio network temporary identifier (Semi-Persistent-Channel State Information-Radio Network Temporary Identifier, SP-CSI-RNTI), a random access-radio network temporary identifier (Random Access-Radio Network Temporary Identifier, RA-RNTI) and an SFI-RNTI.

The first RNTI and the second RNTI may belong to the above-mentioned types of RNTIs, and the first RNTI may be different from the second RNTI.

In Mode 3, the one or more bits in the DCI transmitted through the first PDCCH may be used to indicate the UE not to monitor, within the subsequent N slots, the fourth PDCCH having the same SS as the first PDCCH or having the specific SS.

For example, the DCI transmitted through the first PDCCH having a first SS may be used to indicate the UE not to monitor, within the subsequent N slots, the fourth PDCCH having the first SS within the subsequent N slots.

For another example, the DCI transmitted through the first PDCCH having the first SS may be used to indicate the UE not to monitor, within the subsequent N slots, the fourth PDCCH having a second SS within the subsequent N slots.

In Mode 4, the one or more bits in the DCI transmitted through the first PDCCH may be used to indicate the UE not to monitor, within the subsequent N slots, the fifth PDCCH having the same SS type as the first PDCCH or having the specific SS in at least one of the followings.
(a) The one or more bits in the DCI transmitted through the first PDCCH having a first common SS type may be used to indicate the UE not to monitor, within the subsequent N slots, the fifth PDCCH having the first common SS type, and the first common SS type may be a common SS type 0 (Type 0 CSS) or a common SS type 0A (Type 0A CSS).
(b) The one or more bits in the DCI transmitted through the first PDCCH having a second common SS type may be used to indicate the UE not to monitor, within the subsequent N slots, the fifth PDCCH having the second common SS type within the subsequent N slots, and the first common SS type may be a common SS type 1 (Type 1 CSS).
(c) The one or more bits in the DCI transmitted through the first PDCCH having a third common SS type may be used to indicate the UE not to monitor the fifth PDCCH having the third common SS type within the subsequent N slots, and the third common SS type may be a common SS type 2 (Type 2 CSS).
(d) The one or more bits in the DCI transmitted through the first PDCCH having a fourth common SS type may be used to indicate the UE not to monitor, within the subsequent N slots, the fifth PDCCH having the fourth common SS type, and the fourth common SS type may be a common SS type 3 (Type 3 CSS).
(e) The one or more bits in the DCI transmitted through the first PDCCH having a UE-specific SS (UE SS) may be used to indicate the UE not to monitor the fifth PDCCH having the UE SS type within the subsequent N slots.
(f) The one or more bits in the DCI transmitted through the first PDCCH having the first SS type may be used to indicate the UE not to monitor, within the subsequent N slots, the fifth PDCCH having the second SS type.

According to the embodiments of the present disclosure, the one or more bits in the DCI transmitted through the first PDCCH monitored by the UE may be acquired, and the one or more bits in the DCI transmitted through the first PDCCH may be used to indicate the not-to-be-monitored PDCCH and/or the to-be-monitored PDCCH. As a result, it is able for the UE to determine the PDCCH not be monitored and/or the to-be-monitored PDCCH in accordance with the one or more bits in the DCI transmitted through the first PDCCH, so as to prevent the UE from monitoring the unnecessary PDCCH, thereby to reduce the power consumption for the UE.

As shown in Fig. 3, the present disclosure further provides in some embodiments a PDCCH configuration method for a network side device, which includes Step 301 of configuring one or more bits in DCI transmitted through a first PDCCH, the one or more bits in the DCI of the first PDCCH indicating a not-to-be-monitored PDCCH by a UE and/or a to-be-monitored PDCCH by the UE.

In the embodiments of the present disclosure, the method in Fig. 3 may further include transmitting indication information to the UE. The indication information may be used to indicate the UE to monitor the first PDCCH or indicate that the first PDCCH has been configured by the network side device for the UE, or the indication information may be used to indicate the UE not to monitor the first PDCCH or indicate that the first PDCCH has not been configured by the network side device for the UE.

In a possible embodiment of the present disclosure, the one or more bits in the DCI transmitted through the first PDCCH may be used to indicate the not-to-be-monitored PDCCH in at least one of the following modes 1 to 5.

Mode 1: the one or more bits in the DCI transmitted through the first PDCCH may be used to indicate the UE not to monitor, within subsequent N slots, a second PDCCH having a same DCI format as the first PDCCH or having a specific DCI format. It should be appreciated that, the specific DCI format may be a certain DCI format or some DCI formats. N is an integer greater than or equal to 1.

Mode 2: the one or more bits in the DCI transmitted through the first PDCCH may be used to indicate the UE not to monitor, within subsequent N slots, a third PDCCH having a same RNTI as the first PDCCH or having a specific RNTI. It should be appreciated that, the specific RNTI may be a certain RNTI or some RNTIs. N is an integer greater than or equal to 1.

Mode 3: the one or more bits in the DCI transmitted through the first PDCCH may be used to indicate the UE not to monitor, within subsequent N slots, a fourth PDCCH having a same SS as the first PDCCH or having a specific SS. It should be appreciated that, the specific SS may be a certain SS or some SSs. N is an integer greater than or equal to 1.

Mode 4: the one or more bits in the DCI transmitted through the first PDCCH may be used to indicate the UE not to monitor, within subsequent N slots, a fifth PDCCH having a same SS type as the first PDCCH or having a specific SS type. It should be appreciated that, the specific SS type may be a certain SS type or some SS types. N is an integer greater than or equal to 1.

Mode 5: the one or more bits in the DCI transmitted through the first PDCCH may be used to indicate the UE not to monitor, within subsequent N slots, a sixth PDCCH having a same CORESET as the PDCCH or having a specific CORESET. It should be appreciated that, the specific CORESET may be a certain CORESET or some CORESETs. N is an integer greater than or equal to 1.

In Mode 1, the one or more bits in the DCI transmitted through the first PDCCH may be used to indicate the UE not to monitor, within the subsequent N slots, the second PDCCH having the same DCI format as the first PDCCH or having the specific DCI format in at least one of the followings.
(a) The one or more bits in the DCI in a first DCI format or a second DCI format transmitted through the first PDCCH may be used to indicate the UE not to monitor, within the subsequent N slots, the second PDCCH having the first DCI format or the second DCI format. The first DCI format may be used to schedule physical uplink shared channels for one cell, and it may be DCI format 0_0. The second DCI format may be used to schedule physical downlink shared channels for one cell, and it may be DCI format 1_0. In other words, the PDCCH having at least one of DCI format 0_0 and DCI format 1_0 may not be monitored.
(b) The one or more bits in the DCI in the first DCI format or a third DCI format transmitted through the first PDCCH may be used to indicate the UE not to monitor, within the subsequent N slots, the third PDCCH having the first DCI format or the third DCI format. The first DCI format may be used to schedule physical uplink shared channels for one cell, and it may be DCI format 0_0. The third DCI format may be used to schedule physical uplink shared channels for one cell, and it may be DCI format 0_1. In other words, the UE may be indicated, through the DCI for uplink scheduling, not to monitor subsequent N pieces of DCI for uplink scheduling.
(c) The one or more bits in the DCI in the second DCI format or a fourth DCI format transmitted through the first PDCCH may be used to indicate the UE not to monitor, within the subsequent N slots, the second PDCCH having the second DCI format or the fourth DCI format. The second DCI format may be used to schedule physical downlink shared channels for one cell, and it may be DCI format 1_0. The fourth DCI format may be used to schedule physical downlink shared channels for one cell, and it may be DCI format 1_1. In other words, the UE may be indicated, through the DCI for downlink scheduling, not to monitor subsequent N pieces of DCI for downlink scheduling.
(d) The one or more bits in the DCI in the second DCI format or the fourth DCI format transmitted through the first PDCCH may be used to indicate the UE not to monitor, within the subsequent N slots, the second PDCCH having the first DCI format or the third DCI format. The second DCI format may be used to schedule physical downlink shared channels for one cell, and it may be DCI format 1_0. The fourth DCI format may be used to schedule physical downlink shared channels for one cell, and it may be DCI format 1_1. In other words, the UE may be indicated, through the DCI for downlink scheduling, not to monitor subsequent N pieces of DCI for uplink scheduling.
(e) The one or more bits in the DCI in the first DCI format or the third DCI format transmitted through the first PDCCH may be used to indicate the UE not to monitor, within the subsequent N slots, the second PDCCH having the second DCI format or the fourth DCI format. The first DCI format may be used to schedule physical uplink shared channels for one cell, and it may be DCI format 0_0. The second DCI format may be used to schedule physical downlink shared channels for one cell, and it may be DCI format 1_0. The third DCI format may be used to schedule physical uplink shared channels for one cell, and it may be DCI format 0_1. The fourth DCI format may be used to schedule physical downlink shared channels, and it may be DCI format 1_1. In other words, the UE may be indicated, through the DCI for uplink scheduling, not to monitor subsequent N pieces of DCI for downlink scheduling.
(f) The one or more bits in the DCI in the first DCI format, the second DCI format, the third DCI format or the fourth DCI format transmitted through the first PDCCH may be used to indicate the UE not to monitor, within the subsequent N slots, the second PDCCH having the first DCI format, the second DCI format, the third DCI format or the fourth DCI format. The first DCI format may be used to schedule physical uplink shared channels for one cell, and it may be DCI format 0_0. The second DCI format may be used to schedule physical downlink shared channels for one cell, and it may be DCI format 1_0. The third DCI format may be used to schedule physical uplink shared channels for one cell, and it may be DCI format 0_1. The fourth DCI format may be used to schedule physical downlink shared channels, and it may be DCI format 1_1. In other words, the UE may be indicated, through any DCI for data scheduling, not to monitor subsequent N pieces of DCI for data scheduling.
(g) The one or more bits in the DCI in a fifth DCI format transmitted through the first PDCCH may be used to indicate the UE not to monitor, within the subsequent N slots, the second PDCCH having the fifth DCI format. The fifth DCI format may be used to notify a group of slot formats of the UE, and it may be DCI format 2_0. To be specific, SFI DCI may be used to indicate the UE not to monitor subsequent N pieces of SFI DCI. In other words, SFI in periods where the N pieces of SFI DCI are located may be indicated in accordance with a first piece of SFI DCI for the UE.

In a possible embodiment of the present disclosure, the subsequent N slots may refer to subsequent N slots which meet a monitoring periodicity and an offset value configured by the network side device, or subsequent N downlink slots which meet the monitoring periodicity and the offset value configured by the network side device.

In a possible embodiment of the present disclosure, the one or more bits in the DCI transmitted through the first PDCCH may be used to indicate the to-be-monitored PDCCH in at least one of the followings. The one or more bits in the DCI transmitted through the first PDCCH may be used to indicate the UE to monitor, within a first slot subsequent to the subsequent N slots, a seventh PDCCH having a same DCI format as the first PDCCH or having a specific DCI format. The one or more bits in the DCI transmitted through the first PDCCH may be used to indicate the UEto monitor, within the first slot subsequent to the subsequent N slots, an eighth PDCCH having a same RNTI as the first PDCCH or having a specific RNTI. The one or more bits in the DCI transmitted through the first PDCCH may be used to indicate the UE to monitor, within the first slot subsequent to the subsequent N slots, a ninth PDCCH having a same SS as the first PDCCH or having a specific SS. The one or more bits in the DCI transmitted through the first PDCCH may be used to indicate the UE to monitor, within the first slot subsequent to the subsequent N slots, a tenth PDCCH having a same SS type as the first PDCCH or having a specific SS type. The one or more bits in the DCI transmitted through the first PDCCH may be used to indicate the UE to monitor, within the first slot subsequent to the subsequent N slots, an eleventh PDCCH having a same CORESET as the first PDCCH or having a specific CORESET. N is an integer greater than or equal to 1.

In the embodiments of the present disclosure, the one or more bits in the DCI transmitted through the first PDCCH may be used to indicate the UE to monitor, within the first slot subsequent to the subsequent N slots, the seventh PDCCH having the same DCI format as the first PDCCH or having the specific DCI format in at least one of the followings. The one or more bits in the DCI in a first DCI format or a second DCI format transmitted through the first PDCCH may be used to indicate the UE to monitor, within the first slot subsequent to the subsequent N slots, the seventh PDCCH having the first DCI format or the second DCI format. The one or more bits in the DCI in the first DCI format or a third DCI format transmitted through the first PDCCH may be used to indicate the UE to monitor, within the first slot subsequent to the subsequent N slots, the seventh PDCCH having the first DCI format or the third DCI format. The one or more bits in the DCI in the second DCI format or a fourth DCI format transmitted through the first PDCCH may be used to indicate the UE to monitor, within the first slot subsequent to the subsequent N slots, the seventh PDCCH having the second DCI format or the fourth DCI format. The one or more bits in the DCI in the second DCI format or the fourth DCI format transmitted through the first PDCCH may be used to indicate the UE to monitor, within the first slot subsequent to the subsequent N slots, the seventh PDCCH having the first DCI format or the third DCI format. The one or more bits in the DCI in the first DCI format or the third DCI format transmitted through the first PDCCH may be used to indicate the UE to monitor, within the first slot subsequent to the subsequent N slots, the seventh PDCCH having the second DCI format or the fourth DCI format. The one or more bits in the DCI in the first DCI format, the second DCI format, the third DCI format or the fourth DCI format transmitted through the first PDCCH may be used to indicate the UE to monitor, within the first slot subsequent to the subsequent N slots, the seventh PDCCH having the first DCI format, the second DCI format, the third DCI format or the fourth DCI format. The one or more bits in the DCI in a fifth DCI format transmitted through the first PDCCH may be used to indicate the UE to monitor, within the first slot subsequent to the subsequent N slots, the seventh PDCCH having the fifth DCI format.

The first DCI format may be used to schedule physical uplink shared channels for one cell, and it may be DCI format 0_0. The second DCI format may be used to schedule physical downlink shared channels for one cell, and it may be DCI format 1_0. The third DCI format may be used to schedule physical uplink shared channels for one cell, and it may be DCI format 0_1. The fourth DCI format may be used to schedule physical downlink shared channels for one cell, and it may be DCI format 1_1. The fifth DCI format may be used to notify a group of slot formats of the UE, and it may be DCI format 2_0.

In a possible embodiment of the present disclosure, the first slot subsequent to the subsequent N slots may be a first slot that meets the monitoring periodicity and the offset value configured by the network side device subsequent to the subsequent N slots that meets the monitoring periodicity and the offset value configured by the network side device, or a first downlink slot that meets the monitoring periodicity and the offset value configured by the network side device subsequent to the subsequent N slots that meets the monitoring periodicity and the offset value configured by the network side device.

In a possible embodiment of the present disclosure, a conventional DCI format may be reused by the DCI, i.e., it may be achieved through changing a function of bits in the conventional DCI, or the DCI may be in a new DCI format, i.e., it may be achieved through designing a new DCI format.

In a possible embodiment of the present disclosure, when the one or more bits in the DCI transmitted through the first PDCCH indicates the to-be-monitored PDCCH, the one or more bits in the DCI transmitted through the first PDCCH may be used to indicate a default monitoring behavior of the UE for monitoring the PDCCH. Further, the default monitoring behavior may at least include monitoring, by the UE, the PDCCH within a next slot or downlink slot that meets the monitoring periodicity and the offset value configured by the network side device.

In Mode 2, the one or more bits in the DCI transmitted through the first PDCCH may be used to indicate the UE not to monitor, within the subsequent N slots the third PDCCH having the same RNTI as the first PDCCH or having the specific RNTI.

For example, the one or more bits in the DCI transmitted through the third PDCCH having a first RNTI may be used to indicate the UE not to monitor, within the subsequent N slots, the third PDCCH having the first RNTI.

For another example, the one or more bits in the DCI transmitted through the third PDCCH having the first RNTI may be used to indicate the UE not to monitor, within the subsequent N slots, the third PDCCH having a second RNTI.

In the embodiments of the present disclosure, the RNTI may include any one of a C-RNTI, a TC-RNTI, an SI-RNTI, a P-RNTI, an SPS-RNTI, a CS-RNTI, an INT-RNTI, a TPC-SRS-RNTI, a TPC-PUSCH-RNTI, a TPC-PUCCH-RNTI, an SP-CSI-RNTI, an RA-RNTI and an SFI-RNTI.

The first RNTI and the second RNTI may belong to the above-mentioned types of RNTIs, and the first RNTI may be different from the second RNTI.

In Mode 3, the one or more bits in the DCI transmitted through the first PDCCH may be used to indicate the UE not to monitor, within the subsequent N slots, the fourth PDCCH having the same SS as the first PDCCH or having the specific SS.

For example, the DCI transmitted through the first PDCCH having a first SS may be used to indicate the UE not to monitor, within the subsequent N slots, the fourth PDCCH having the first SS.

For another example, the DCI transmitted through the first PDCCH having the first SS may be used to indicate the UE not to monitor, within the subsequent N slots, the fourth PDCCH having a second SS.

In Mode 4, the one or more bits in the DCI transmitted through the first PDCCH may be used to indicate the UE not to monitor, within the subsequent N slots, the fifth PDCCH having the same SS type as the first PDCCH or having the specific SS type in at least one of the followings.
(a) The one or more bits in the DCI transmitted through the first PDCCH having a first common SS type may be used to indicate the UE not to monitor, within the subsequent N slots, the fifth PDCCH having the first common SS type, and the first common SS type may be a common SS type 0 (Type 0 CSS) or a common SS type 0A (Type 0A CSS).
(b) The one or more bits in the DCI transmitted through the first PDCCH having a second common SS type may be used to indicate the UE not to monitor, within the subsequent N slots, the fifth PDCCH having the second common SS type, and the first common SS type may be a common SS type 1 (Type 1 CSS).
(c) The one or more bits in the DCI transmitted through the first PDCCH having a third common SS type may be used to indicate the UE not to monitor, within the subsequent N slots, the fifth PDCCH having the third common SS type, and the third common SS type may be a common SS type 2 (Type 2 CSS).
(d) The one or more bits in the DCI transmitted through the first PDCCH having a fourth common SS type may be used to indicate the UE not to monitor, within the subsequent N slots, the fifth PDCCH having the fourth common SS type, and the fourth common SS type may be a common SS type 3 (Type 3 CSS).
(e) The one or more bits in the DCI transmitted through the first PDCCH having a UE-specific SS (UE SS) may be used to indicate the UE not to monitor, within the subsequent N slots, the fifth PDCCH having the UE SS type.
(f) The one or more bits in the DCI transmitted through the first PDCCH having the first SS type may be used to indicate the UE not to monitor, within the subsequent N slots, the fifth PDCCH having the second SS type.

According to the embodiments of the present disclosure, the one or more bits in the DCI transmitted through the first PDCCH monitored by the UE may be acquired, and the one or more bits in the DCI transmitted through the first PDCCH may be used to indicate the not-to-be-monitored PDCCH and/or the to-be-monitored PDCCH. As a result, it is able for the UE to determine the not-be-monitored PDCCH and/or the to-be-monitored PDCCH in accordance with the one or more bits in the DCI transmitted through the first PDCCH, so as to prevent the UE from monitoring the unnecessary PDCCH, thereby to reduce the power consumption for the UE.

The present disclosure further provides in some embodiments a UE. A principle of the UE for solving the problem is similar to that of the PDCCH monitoring method mentioned hereinabove, so the implementation of the UE may refer to that of the method, which will not be particularly defined herein.

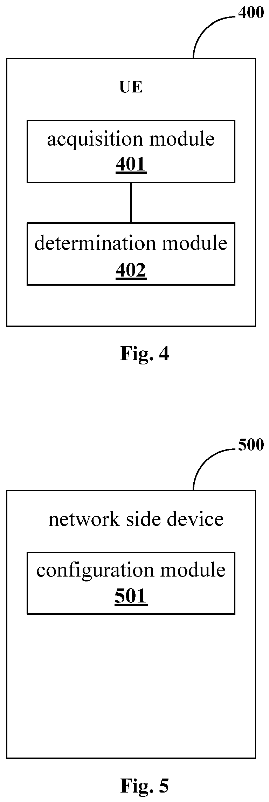

As shown in Fig. 4 which shows a structure of the UE according to one embodiment of the present disclosure, the UE 400 includes: an acquisition module 401 configured to acquire one or more bits in DCI transmitted through a first PDCCH monitored by the UE, the one or more bits in the DCI of the first PDCCH indicating a not-to-be-monitored PDCCH and/or a to-be-monitored PDCCH; and a determination module 402 configured to determine the not-to-be-monitored PDCCH and/or the to-be-monitored PDCCH in accordance with the one or more bits in the DCI of the first PDCCH.

In a possible embodiment of the present disclosure, the UE may further include a reception module configured to receive indication information from a network side device. The indication information may be used to indicate the UE to monitor the first PDCCH or indicate that the first PDCCH has been configured by the network side device for the UE, or the indication information may be used to indicate the UE not to monitor the first PDCCH or indicate that the first PDCCH has not been configured by the network side device for the UE.

In a possible embodiment of the present disclosure, the one or more bits in the DCI transmitted through the first PDCCH may be used to indicate the not-to-be-monitored PDCCH in at least one of the following modes 1 to 5.

Mode 1: the one or more bits in the DCI transmitted through the first PDCCH may be used to indicate the UE not to monitor, within subsequent N slots, a second PDCCH having a same DCI format as the first PDCCH or having a specific DCI format. It should be appreciated that, the specific DCI format may be a certain DCI format or some DCI formats. N is an integer greater than or equal to 1.

Mode 2: the one or more bits in the DCI transmitted through the first PDCCH may be used to indicate the UEnot to monitor, within subsequent N slots, a third PDCCH having a same RNTI as the first PDCCH or having a specific RNTI. It should be appreciated that, the specific RNTI may be a certain RNTI or some RNTIs. N is an integer greater than or equal to 1.

Mode 3: the one or more bits in the DCI transmitted through the first PDCCH may be used to indicate the UE not to monitor, within subsequent N slots, a fourth PDCCH having a same SS as the first PDCCH or having a specific SS. It should be appreciated that, the specific SS may be a certain SS or some SSs. N is an integer greater than or equal to 1.

Mode 4: the one or more bits in the DCI transmitted through the first PDCCH may be used to indicate the UE not to monitor, within subsequent N slots, a fifth PDCCH having a same SS type as the first PDCCH or having a specific SS type. It should be appreciated that, the specific SS type may be a certain SS type or some SS types. N is an integer greater than or equal to 1.

Mode 5: the one or more bits in the DCI transmitted through the first PDCCH may be used to indicate the UE not to monitor, within subsequent N slots, a sixth PDCCH having a same CORESET as the PDCCH or having a specific CORESET. It should be appreciated that, the specific CORESET may be a certain CORESET or some CORESETs. N is an integer greater than or equal to 1.

In Mode 1, the one or more bits in the DCI transmitted through the first PDCCH may be used to indicate the UE not to monitor, within the subsequent N slots, the second PDCCH having the same DCI format as the first PDCCH or having the specific DCI format in at least one of the followings.
(a) The one or more bits in the DCI in a first DCI format or a second DCI format transmitted through the first PDCCH may be used to indicate the UE not to monitor, within the subsequent N slots, the second PDCCH having the first DCI format or the second DCI format. The first DCI format may be used to schedule physical uplink shared channels for one cell, and it may be DCI format 0_0. The second DCI format may be used to schedule physical downlink shared channels for one cell, and it may be DCI format 1_0.
(b) The one or more bits in the DCI in the first DCI format or a third DCI format transmitted through the first PDCCH may be used to indicate the UE not to monitor, within the subsequent N slots, the third PDCCH having the first DCI format or the third DCI format. The first DCI format may be used to schedule physical uplink shared channels for one cell, and it may be DCI format 0_0. The third DCI format may be used to schedule physical uplink shared channels for one cell, and it may be DCI format 0_1.
(c) The one or more bits in the DCI in the second DCI format or a fourth DCI format transmitted through the first PDCCH may be used to indicate the UE not to monitor, within the subsequent N slots, the second PDCCH having the second DCI format or the fourth DCI format. The second DCI format may be used to schedule physical downlink shared channels for one cell, and it may be DCI format 1_0. The fourth DCI format may be used to schedule physical downlink shared channels for one cell, and it may be DCI format 1_1.
(d) The one or more bits in the DCI in the second DCI format or the fourth DCI format transmitted through the first PDCCH may be used to indicate the UE not to monitor, within the subsequent N slots, the second PDCCH having the first DCI format or the third DCI format. The second DCI format may be used to schedule physical downlink shared channels for one cell, and it may be DCI format 1_0. The fourth DCI format may be used to schedule physical downlink shared channels for one cell, and it may be DCI format 1_1.
(e) The one or more bits in the DCI in the first DCI format or the third DCI format transmitted through the first PDCCH may be used to indicate the UE not to monitor, within the subsequent N slots, the second PDCCH having the second DCI format or the fourth DCI format. The first DCI format may be used to schedule physical uplink shared channels for one cell, and it may be DCI format 0_0. The second DCI format may be used to schedule physical downlink shared channels for one cell, and it may be DCI format 1_0. The third DCI format may be used to schedule physical uplink shared channels for one cell, and it may be DCI format 0_1. The fourth DCI format may be used to schedule physical downlink shared channels, and it may be DCI format 1_1.
(f) The one or more bits in the DCI in the first DCI format, the second DCI format, the third DCI format or the fourth DCI format transmitted through the first PDCCH may be used to indicate the UE not to monitor, within the subsequent N slots, the second PDCCH having the first DCI format, the second DCI format, the third DCI format or the fourth DCI format. The first DCI format may be used to schedule physical uplink shared channels for one cell, and it may be DCI format 0_0. The second DCI format may be used to schedule physical downlink shared channels for one cell, and it may be DCI format 1_0. The third DCI format may be used to schedule physical uplink shared channels for one cell, and it may be DCI format 0_1. The fourth DCI format may be used to schedule physical downlink shared channels, and it may be DCI format 1_1.
(g) The one or more bits in the DCI in a fifth DCI format transmitted through the first PDCCH may be used to indicate the UE not to monitor, within the subsequent N slots, the second PDCCH having the fifth DCI format. The fifth DCI format may be used to notify a group of slot formats of the UE, and it may be DCI format 2_0. To be specific, SFI DCI may be used to indicate the UE not to monitor subsequent N pieces of SFI DCI. In other words, SFI in slots where the N pieces of SFI DCI are located may be indicated in accordance with a first piece of SFI DCI by default for the UE.

In a possible embodiment of the present disclosure, the subsequent N slots may refer to subsequent N slots which meet a monitoring periodicity and an offset value configured by the network side device, or subsequent N downlink slots which meet the monitoring periodicity and the offset value configured by the network side device.

In a possible embodiment of the present disclosure, the one or more bits in the DCI transmitted through the first PDCCH may be used to indicate the to-be-monitored PDCCH in at least one of the followings. The one or more bits in the DCI transmitted through the first PDCCH may be used to indicate the UE to monitor, within a first slot subsequent to the subsequent N slots, a seventh PDCCH having a same DCI format as the first PDCCH or having a specific DCI format. The one or more bits in the DCI transmitted through the first PDCCH may be used to indicate the UE to monitor, within the first slot subsequent to the subsequent N slots, an eighth PDCCH having a same RNTI as the first PDCCH or having a specific RNTI. The one or more bits in the DCI transmitted through the first PDCCH may be used to indicate the UE to monitor, within the first slot subsequent to the subsequent N slots, a ninth PDCCH having a same SS as the first PDCCH or having a specific SS. The one or more bits in the DCI transmitted through the first PDCCH may be used to indicate the UE to monitor, within the first slot subsequent to the subsequent N slots, a tenth PDCCH having a same SS type as the first PDCCH or having a specific SS type. The one or more bits in the DCI transmitted through the first PDCCH may be used to indicate the UE to monitor, within the first slot subsequent to the subsequent N slots, an eleventh PDCCH having a same CORESET as the first PDCCH or having a specific CORESET. N is an integer greater than or equal to 1.

In the embodiments of the present disclosure, the one or more bits in the DCI transmitted through the first PDCCH may be used to indicate the UE to monitor, within the first slot subsequent to the subsequent N slots, the seventh PDCCH having the same DCI format as the first PDCCH or having the specific DCI format in at least one of the followings. The one or more bits in the DCI in a first DCI format or a second DCI format transmitted through the first PDCCH may be used to indicate the UE to monitor, within the first slot subsequent to the subsequent N slots, the seventh PDCCH having the first DCI format or the second DCI format. The one or more bits in the DCI in the first DCI format or a third DCI format transmitted through the first PDCCH may be used to indicate the UE to monitor, within the first slot subsequent to the subsequent N slots, the seventh PDCCH having the first DCI format or the third DCI format. The one or more bits in the DCI in the second DCI format or a fourth DCI format transmitted through the first PDCCH may be used to indicate the UE to monitor, within the first slot subsequent to the subsequent N slots, the seventh PDCCH having the second DCI format or the fourth DCI format. The one or more bits in the DCI in the second DCI format or the fourth DCI format transmitted through the first PDCCH may be used to indicate the UE to monitor, within the first slot subsequent to the subsequent N slots, the seventh PDCCH having the first DCI format or the third DCI format. The one or more bits in the DCI in the first DCI format or the third DCI format transmitted through the first PDCCH may be used to indicate the UE to monitor, within the first slot subsequent to the subsequent N slots, the seventh PDCCH having the second DCI format or the fourth DCI format. The one or more bits in the DCI in the first DCI format, the second DCI format, the third DCI format or the fourth DCI format transmitted through the first PDCCH may be used to indicate the UE to monitor, within the first slot subsequent to the subsequent N slots, the seventh PDCCH having the first DCI format, the second DCI format, the third DCI format or the fourth DCI format. The one or more bits in the DCI in a fifth DCI format transmitted through the first PDCCH may be used to indicate the UE to monitor, within the first slot subsequent to the subsequent N slots, the seventh PDCCH having the fifth DCI format.

The first DCI format may be used to schedule physical uplink shared channels for one cell. The second DCI format may be used to schedule physical downlink shared channels for one cell. The third DCI format may be used to schedule physical uplink shared channels for one cell. The fourth DCI format may be used to schedule physical downlink shared channels for one cell. The fifth DCI format may be used to notify a group of slot formats of the UE.

In a possible embodiment of the present disclosure, the first slot subsequent to the subsequent N slots may be a first slot that meets the monitoring periodicity and the offset value configured by the network side device subsequent to the subsequent N slots that meets the monitoring periodicity and the offset value configured by the network side device, or a first downlink slot that meets the monitoring periodicity and the offset value configured by the network side device subsequent to the subsequent N slots that meets the monitoring periodicity and the offset value configured by the network side device.

In a possible embodiment of the present disclosure, a conventional DCI format may be reused by the DCI, i.e., it may be achieved through changing a function of bits in the conventional DCI, or the DCI may be in a new DCI format, i.e., it may be achieved through designing a new DCI format.

In a possible embodiment of the present disclosure, when the one or more bits in the DCI transmitted through the first PDCCH indicates the to-be-monitored PDCCH, the one or more bits in the DCI transmitted through the first PDCCH may be used to indicate a default monitoring behavior of the UE for monitoring the PDCCH. Further, the default monitoring behavior may at least include monitoring, by the UE, the PDCCH within a next slot or downlink slot that meets the monitoring periodicity and the offset value configured by the network side device.

In Mode 2, the one or more bits in the DCI transmitted through the first PDCCH may be used to indicate the UE not to monitor, within the subsequent N slots, the third PDCCH having the same RNTI as the first PDCCH or having the specific RNTI.

For example, the one or more bits in the DCI transmitted through the third PDCCH having a first RNTI may be used to indicate the UE not to monitor, within the subsequent N slots, the third PDCCH having the first RNTI.

For another example, the one or more bits in the DCI transmitted through the third PDCCH having the first RNTI may be used to indicate the UE not to monitor, within the subsequent N slots, the third PDCCH having a second RNTI.

In the embodiments of the present disclosure, the RNTI may include any one of a C-RNTI, a TC-RNTI, an SI-RNTI, a P-RNTI, an SPS-RNTI, a CS-RNTI, an INT-RNTI, a TPC-SRS-RNTI, a TPC-PUSCH-RNTI, a TPC-PUCCH-RNTI, an SP-CSI-RNTI, an RA-RNTI, a TC-RNTI and an SFI-RNTI.

The first RNTI and the second RNTI may belong to the above-mentioned types of RNTIs, and the first RNTI may be different from the second RNTI.

In Mode 3, the one or more bits in the DCI transmitted through the first PDCCH may be used to indicate the UE not to monitor, within the subsequent N slots, the fourth PDCCH having the same SS as the first PDCCH or having the specific SS.

For example, the DCI transmitted through the first PDCCH having a first SS may be used to indicate the UE not to monitor, within the subsequent N slots, the fourth PDCCH having the first SS.

For another example, the DCI transmitted through the first PDCCH having the first SS may be used to indicate the UE not to monitor, within the subsequent N slots, the fourth PDCCH having a second SS.

In Mode 4, the one or more bits in the DCI transmitted through the first PDCCH may be used to indicate the UE not to monitor, within the subsequent N slots, the fifth PDCCH having the same SS type as the first PDCCH or having the specific SS type in at least one of the followings.
(a) The one or more bits in the DCI transmitted through the first PDCCH having a first common SS type may be used to indicate the UE not to monitor, within the subsequent N slots, the fifth PDCCH having the first common SS type, and the first common SS type may be a common SS type 0 or a common SS type 0A.
(b) The one or more bits in the DCI transmitted through the first PDCCH having a second common SS type may be used to indicate the UE not to monitor, within the subsequent N slots, the fifth PDCCH having the second common SS type, and the first common SS type may be a common SS type 1.
(c) The one or more bits in the DCI transmitted through the first PDCCH having a third common SS type may be used to indicate the UE not to monitor, within the subsequent N slots, the fifth PDCCH having the third common SS type, and the third common SS type may be a common SS type 2.
(d) The one or more bits in the DCI transmitted through the first PDCCH having a fourth common SS type may be used to indicate the UE not to monitor, within the subsequent N slots, the fifth PDCCH having the fourth common SS type, and the fourth common SS type may be a common SS type 3.
(e) The one or more bits in the DCI transmitted through the first PDCCH having a UE SS may be used to indicate the UE not to monitor, within the subsequent N slots, the fifth PDCCH having the UE SS type.
(f) The one or more bits in the DCI transmitted through the first PDCCH having the first SS type may be used to indicate the UE not to monitor, within the subsequent N slots, the fifth PDCCH having the second SS type.

The UE in the embodiments of the present disclosure may be used to implement the above-mentioned method with a similar principle and technical effect, which will not be particularly defined herein.

The present disclosure further provides in some embodiments a network side device. A principle of the network side device for solving the problem is similar to that of the PDCCH configuration method mentioned hereinabove, so the implementation of the network side device may refer to that of the method, which will not be particularly defined herein.

As shown in Fig. 5 which shows a structure of the network side device according to one embodiment of the present disclosure, the network side device 500 includes a configuration module 501 configured to configure one or more bits in DCI transmitted through a first PDCCH, the one or more bits in the DCI of the first PDCCH indicating a not-to-be-monitored PDCCH by a UE and/or a to-be-monitored PDCCH by the UE.

In a possible embodiment of the present disclosure, the network side device may further include a transmission module configured to transmit indication information to the UE. The indication information may be used to indicate the UE to monitor the first PDCCH or indicate that the first PDCCH has been configured by the network side device for the UE, or the indication information may be used to indicate the UE not to monitor the first PDCCH or indicate that the first PDCCH has not been configured by the network side device for the UE.

In a possible embodiment of the present disclosure, the one or more bits in the DCI transmitted through the first PDCCH may be used to indicate the not-to-be-monitored PDCCH in at least one of the following modes 1 to 5.

Mode 1: the one or more bits in the DCI transmitted through the first PDCCH may be used to indicate the UE not to monitor, within subsequent N slots, a second PDCCH having a same DCI format as the first PDCCH or having a specific DCI format. It should be appreciated that, the specific DCI format may be a certain DCI format or some DCI formats. N is an integer greater than or equal to 1.

Mode 2: the one or more bits in the DCI transmitted through the first PDCCH may be used to indicate the UE not to monitor, within subsequent N slots, a third PDCCH having a same RNTI as the first PDCCH or having a specific RNTI. It should be appreciated that, the specific RNTI may be a certain RNTI or some RNTIs. N is an integer greater than or equal to 1.

Mode 3: the one or more bits in the DCI transmitted through the first PDCCH may be used to indicate the UE not to monitor, within subsequent N slots, a fourth PDCCH having a same SS as the first PDCCH or having a specific SS. It should be appreciated that, the specific SS may be a certain SS or some SSs. N is an integer greater than or equal to 1.

Mode 4: the one or more bits in the DCI transmitted through the first PDCCH may be used to indicate the UE not to monitor, within subsequent N slots, a fifth PDCCH having a same SS type as the first PDCCH or having a specific SS type. It should be appreciated that, the specific SS type may be a certain SS type or some SS types. N is an integer greater than or equal to 1.

Mode 5: the one or more bits in the DCI transmitted through the first PDCCH may be used to indicate the UE not to monitor, within subsequent N slots, a sixth PDCCH having a same CORESET as the PDCCH or having a specific CORESET. It should be appreciated that, the specific CORESET may be a certain CORESET or some CORESETs. N is an integer greater than or equal to 1.

In Mode 1, the one or more bits in the DCI transmitted through the first PDCCH may be used to indicate the UE not to monitor, within the subsequent N slots, the second PDCCH having the same DCI format as the first PDCCH or having the specific DCI format in at least one of the followings.
(a) The one or more bits in the DCI in a first DCI format or a second DCI format transmitted through the first PDCCH may be used to indicate the UE not to monitor, within the subsequent N slots, the second PDCCH having the first DCI format or the second DCI format. The first DCI format may be used to schedule physical uplink shared channels for one cell, and it may be DCI format 0_0. The second DCI format may be used to schedule physical downlink shared channels for one cell, and it may be DCI format 1_0.
(b) The one or more bits in the DCI in the first DCI format or a third DCI format transmitted through the first PDCCH may be used to indicate the UE not to monitor, within the subsequent N slots, the third PDCCH having the first DCI format or the third DCI format. The first DCI format may be used to schedule physical uplink shared channels for one cell, and it may be DCI format 0_0. The third DCI format may be used to schedule physical uplink shared channels for one cell, and it may be DCI format 0_1.
(c) The one or more bits in the DCI in the second DCI format or a fourth DCI format transmitted through the first PDCCH may be used to indicate the UE not to monitor, within the subsequent N slots, the second PDCCH having the second DCI format or the fourth DCI format. The second DCI format may be used to schedule physical downlink shared channels for one cell, and it may be DCI format 1_0. The fourth DCI format may be used to schedule physical downlink shared channels for one cell, and it may be DCI format 1_1.
(d) The one or more bits in the DCI in the second DCI format or the fourth DCI format transmitted through the first PDCCH may be used to indicate the UE not to monitor, within the subsequent N slots, the second PDCCH having the first DCI format or the third DCI format. The second DCI format may be used to schedule physical downlink shared channels for one cell, and it may be DCI format 1_0. The fourth DCI format may be used to schedule physical downlink shared channels for one cell, and it may be DCI format 1_1.
(e) The one or more bits in the DCI in the first DCI format or the third DCI format transmitted through the first PDCCH may be used to indicate the UE not to monitor, within the subsequent N slots, the second PDCCH having the second DCI format or the fourth DCI format. The first DCI format may be used to schedule physical uplink shared channels for one cell, and it may be DCI format 0_0. The second DCI format may be used to schedule physical downlink shared channels for one cell, and it may be DCI format 1_0. The third DCI format may be used to schedule physical uplink shared channels for one cell, and it may be DCI format 0_1. The fourth DCI format may be used to schedule physical downlink shared channels, and it may be DCI format 1_1.
(f) The one or more bits in the DCI in the first DCI format, the second DCI format, the third DCI format or the fourth DCI format transmitted through the first PDCCH may be used to indicate the UE not to monitor, within the subsequent N slots, the second PDCCH having the first DCI format, the second DCI format, the third DCI format or the fourth DCI format. The first DCI format may be used to schedule physical uplink shared channels for one cell, and it may be DCI format 0_0. The second DCI format may be used to schedule physical downlink shared channels for one cell, and it may be DCI format 1_0. The third DCI format may be used to schedule physical uplink shared channels for one cell, and it may be DCI format 0_1. The fourth DCI format may be used to schedule physical downlink shared channels, and it may be DCI format 1_1.
(g) The one or more bits in the DCI in a fifth DCI format transmitted through the first PDCCH may be used to indicate the UE not to monitor, within the subsequent N slots, the second PDCCH having the fifth DCI format. The fifth DCI format may be used to notify a group of slot formats of the UE, and it may be DCI format 2_0. To be specific, SFI DCI may be used to indicate the UE not to monitor subsequent N pieces of SFI DCI. In other words, SFI in periods where the N pieces of SFI DCI are located may be indicated in accordance with a first piece of SFI DCI for the UE.

In a possible embodiment of the present disclosure, the subsequent N slots may refer to subsequent N slots which meet a monitoring periodicity and an offset value configured by the network side device, or subsequent N downlink slots which meet the monitoring periodicity and the offset value configured by the network side device.

In a possible embodiment of the present disclosure, the one or more bits in the DCI transmitted through the first PDCCH may be used to indicate the to-be-monitored PDCCH in at least one of the followings. The one or more bits in the DCI transmitted through the first PDCCH may be used to indicate the UE to monitor, within a first slot subsequent to the subsequent N slots, a seventh PDCCH having a same DCI format as the first PDCCH or having a specific DCI format. The one or more bits in the DCI transmitted through the first PDCCH may be used to indicate the UE to monitor, within the first slot subsequent to the subsequent N slots, an eighth PDCCH having a same RNTI as the first PDCCH or having a specific RNTI. The one or more bits in the DCI transmitted through the first PDCCH may be used to indicate the UE to monitor, within the first slot subsequent to the subsequent N slots, a ninth PDCCH having a same SS as the first PDCCH or having a specific SS. The one or more bits in the DCI transmitted through the first PDCCH may be used to indicate the UE to monitor, within the first slot subsequent to the subsequent N slots, a tenth PDCCH having a same SS type as the first PDCCH or having a specific SS type. The one or more bits in the DCI transmitted through the first PDCCH may be used to indicate the UE to monitor, within the first slot subsequent to the subsequent N slots, an eleventh PDCCH having a same CORESET as the first PDCCH or having a specific CORESET. N is an integer greater than or equal to 1.

In the embodiments of the present disclosure, the one or more bits in the DCI transmitted through the first PDCCH may be used to indicate the UE to monitor, within the first slot subsequent to the subsequent N slots, the seventh PDCCH having the same DCI format as the first PDCCH or having the specific DCI format in at least one of the followings. The one or more bits in the DCI in a first DCI format or a second DCI format transmitted through the first PDCCH may be used to indicate the UE to monitor, within the first slot subsequent to the subsequent N slots, the seventh PDCCH having the first DCI format or the second DCI format. The one or more bits in the DCI in the first DCI format or a third DCI format transmitted through the first PDCCH may be used to indicate the UE to monitor, within the first slot subsequent to the subsequent N slots, the seventh PDCCH having the first DCI format or the third DCI format. The one or more bits in the DCI in the second DCI format or a fourth DCI format transmitted through the first PDCCH may be used to indicate the UE to monitor, within the first slot subsequent to the subsequent N slots, the seventh PDCCH having the second DCI format or the fourth DCI format. The one or more bits in the DCI in the second DCI format or the fourth DCI format transmitted through the first PDCCH may be used to indicate the UE to monitor, within the first slot subsequent to the subsequent N slots, the seventh PDCCH having the first DCI format or the third DCI format. The one or more bits in the DCI in the first DCI format or the third DCI format transmitted through the first PDCCH may be used to indicate the UE to monitor, within the first slot subsequent to the subsequent N slots, the seventh PDCCH having the second DCI format or the fourth DCI format. The one or more bits in the DCI in the first DCI format, the second DCI format, the third DCI format or the fourth DCI format transmitted through the first PDCCH may be used to indicate the UE to monitor, within the first slot subsequent to the subsequent N slots, the seventh PDCCH having the first DCI format, the second DCI format, the third DCI format or the fourth DCI format. The one or more bits in the DCI in a fifth DCI format transmitted through the first PDCCH may be used to indicate the to monitor, within the first slot subsequent to the subsequent N slots, the seventh PDCCH having the fifth DCI format.

The first DCI format may be used to schedule physical uplink shared channels for one cell. The second DCI format may be used to schedule physical downlink shared channels for one cell. The third DCI format may be used to schedule physical uplink shared channels for one cell. The fourth DCI format may be used to schedule physical downlink shared channels for one cell. The fifth DCI format may be used to notify a group of slot formats of the UE.

In a possible embodiment of the present disclosure, the first slot subsequent to the subsequent N slots may be a first slot that meets the monitoring periodicity and the offset value configured by the network side device subsequent to the subsequent N slots that meets the monitoring periodicity and the offset value configured by the network side device, or a first downlink slot that meets the monitoring periodicity and the offset value configured by the network side device subsequent to the subsequent N slots that meets the monitoring periodicity and the offset value configured by the network side device.

In a possible embodiment of the present disclosure, a conventional DCI format may be reused by the DCI, i.e., it may be achieved through changing a function of bits in the conventional DCI, or the DCI may be in a new DCI format, i.e., it may be achieved through designing a new DCI format.

In a possible embodiment of the present disclosure, when the one or more bits in the DCI transmitted through the first PDCCH indicates the to-be-monitored PDCCH, the one or more bits in the DCI transmitted through the first PDCCH may be used to indicate a default monitoring behavior of the UE for monitoring the PDCCH. Further, the default monitoring behavior may at least include monitoring, by the UE, the PDCCH within a next slot or downlink slot that meets the monitoring periodicity and the offset value configured by the network side device.

In Mode 2, the one or more bits in the DCI transmitted through the first PDCCH may be used to indicate the UE not to monitor, within the subsequent N slots, the third PDCCH having the same RNTI as the first PDCCH or having the specific RNTI.

For example, the one or more bits in the DCI transmitted through the third PDCCH having a first RNTI may be used to indicate the UE not to monitor, within the subsequent N slots, the third PDCCH having the first RNTI.

For another example, the one or more bits in the DCI transmitted through the third PDCCH having the first RNTI may be used to indicate the UE not to monitor, within the subsequent N slots, the third PDCCH having a second RNTI.

In the embodiments of the present disclosure, the RNTI may include any one of a C-RNTI, a TC-RNTI, an SI-RNTI, a P-RNTI, an SPS-RNTI, a CS-RNTI, an INT-RNTI, a TPC-SRS-RNTI, a TPC-PUSCH-RNTI, a TPC-PUCCH-RNTI, an SP-CSI-RNTI, an RA-RNTI and an SFI-RNTI.

The first RNTI and the second RNTI may belong to the above-mentioned types of RNTIs, and the first RNTI may be different from the second RNTI.

In Mode 3, the one or more bits in the DCI transmitted through the first PDCCH may be used to indicate the UE not to monitor, within the subsequent N slots, the fourth PDCCH having the same SS as the first PDCCH or having the specific SS.

For example, the DCI transmitted through the first PDCCH having a first SS may be used to indicate the UE not to monitor, within the subsequent N slots, the fourth PDCCH having the first SS.

For another example, the DCI transmitted through the first PDCCH having the first SS may be used to indicate the UE not to monitor, within the subsequent N slots, the fourth PDCCH having a second SS.

In Mode 4, the one or more bits in the DCI transmitted through the first PDCCH may be used to indicate the UE not to monitor, within the subsequent N slots, the fifth PDCCH having the same SS type as the first PDCCH or having the specific SS type in at least one of the followings.
(a) The one or more bits in the DCI transmitted through the first PDCCH having a first common SS type may be used to indicate the UE not to monitor, within the subsequent N slots, the fifth PDCCH having the first common SS type, and the first common SS type may be a common SS type 0 or a common SS type 0A.
(b) The one or more bits in the DCI transmitted through the first PDCCH having a second common SS type may be used to indicate the UE not to monitor, within the subsequent N slots, the fifth PDCCH having the second common SS type, and the first common SS type may be a common SS type 1.
(c) The one or more bits in the DCI transmitted through the first PDCCH having a third common SS type may be used to indicate the UE not to monitor, within the subsequent N slots, the fifth PDCCH having the third common SS type, and the third common SS type may be a common SS type 2.
(d) The one or more bits in the DCI transmitted through the first PDCCH having a fourth common SS type may be used to indicate the UE not to monitor, within the subsequent N slots, the fifth PDCCH having the fourth common SS type, and the fourth common SS type may be a common SS type 3.
(e) The one or more bits in the DCI transmitted through the first PDCCH having a UE SS may be used to indicate the UE not to monitor, within the subsequent N slots, the fifth PDCCH having the UE SS type.
(f) The one or more bits in the DCI transmitted through the first PDCCH having the first SS type may be used to indicate the UE not to monitor, within the subsequent N slots, the fifth PDCCH having the second SS type.

The network side device in the embodiments of the present disclosure may be used to implement the above-mentioned method with a similar principle and technical effect, which will not be particularly defined herein.

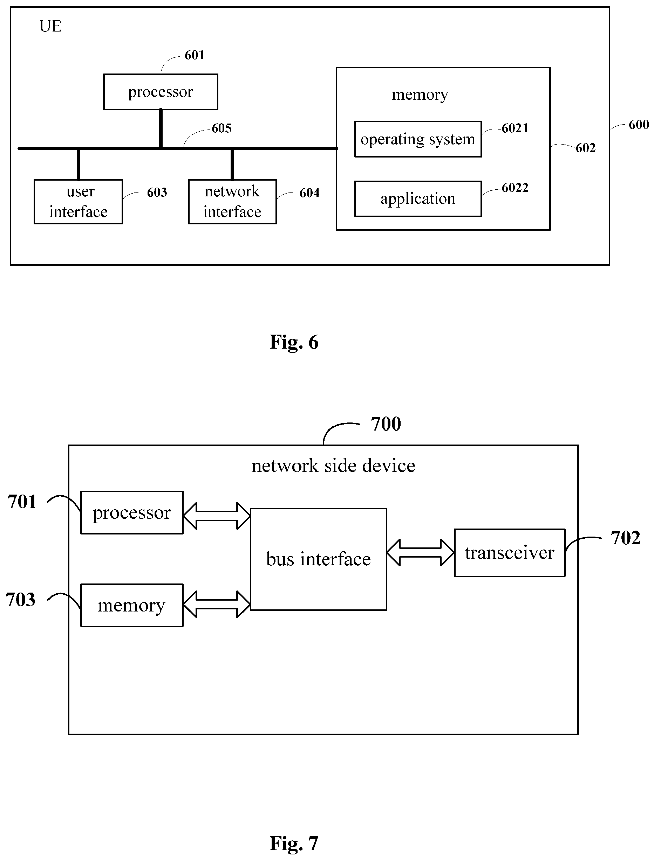

As shown in Fig. 6, the present disclosure further provides in some embodiments a UE 600, which includes at least one processor 601, a memory 602, at least one network interface 604 and a user interface. The components of the UE 600 may be coupled together through a bus system 605. It should be appreciated that, the bus system 605 is configured to achieve connection and communication among the components. Apart from a data bus, the bus system 605 may further include a power source bus, a control bus and a state signal bus. For clarification, all these buses in Fig. 6 may be collectively called as bus system 605.

The user interface 603 may include a display, a keyboard or a pointing device (e.g., mouse, track ball, touch plate or touch panel).

It should be appreciated that, the memory 602 may include a volatile memory, a nonvolatile memory or both. The nonvolatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM) or a flash memory. The volatile memory may be a random access memory (Random Access Memory, RAM) which serves as an external high-speed cache. Illustratively but not restrictively, the RAM may include static RAM (Static RAM, SRAM), dynamic RAM (Dynamic RAM, DRAM), synchronous DRAM (Synchronous DRAM, SDRAM), double data rate SDRAM (Double Data Rate SDRAM, DDRSDRAM), enhanced SDRAM (Enhanced SDRAM, ESDRAM), synchronous link DRAM (Synchronous Link DRAM, SLDRAM) or direct Rambus RAM (Direct Rambus RAM, DRRAM). The memory 602 intends to include, but not limited to, the above-mentioned and any other appropriate memories.

In some embodiments of the present disclosure, the following elements may be stored in the memory 602: an executable module or data structure, a subset or an extended set thereof, an operating system 6021 and an application 6022.

The operating system 6021 may include various system programs, e.g., a framework layer, a core layer and a driving layer, so as to implement various basic services and process hardware-based tasks. The application 6022 may include various applications, e.g., media player and browser, so as to implement various application services. The programs for implementing the above-mentioned method may be included in the application 6022.

In the embodiments of the present disclosure, through calling a program or instruction stored in the memory 602, e.g., a program or instruction stored in the application 6022, the processor 601 is configured to: acquire one or more bits in DCI transmitted through a first PDCCH monitored by the UE, the one or more bits in the DCI of the first PDCCH indicating a not-to-be-monitored PDCCH and/or a to-be-monitored PDCCH; and determine the not-to-be-monitored PDCCH and/or the to-be-monitored PDCCH in accordance with the one or more bits in the DCI of the first PDCCH.

The UE in the embodiments of the present disclosure may be used to implement the above-mentioned method with a similar principle and technical effect, which will not be particularly defined herein.

As shown in Fig. 7, the present disclosure further provides in some embodiments a network side device 700 which includes a processor 701, a transceiver 702, a memory 703, a user interface 704 and a bus interface.

The processor 701 may take charge of managing the bus architecture as well as general processings. The memory 703 may store therein data for the operation of the processor 701.

In the embodiments of the present disclosure, the network side device 700 may further include a computer program stored in the memory 703 and executed by the processor 701. The computer program is executed by the processor 701 so as to configure one or more bits in DCI transmitted through a first PDCCH, the one or more bits in the DCI of the first PDCCH indicating a not-to-be-monitored PDCCH by a UE and/or a to-be-monitored PDCCH by the UE.

In Fig. 7, bus architecture may include a number of buses and bridges connected to each other, so as to connect various circuits for one or more processors 701 and one or more memories 703. In addition, as is known in the art, the bus architecture may be used to connect any other circuits, such as a circuit for a peripheral device, a circuit for a voltage stabilizer and a power management circuit. The bus interface may be provided, and the transceiver 702 may consist of a plurality of elements, i.e., a transmitter and a receiver for communication with any other devices over a transmission medium.

The steps of the methods or algorithm described in conjunction with the contents mentioned hereinabove may be implemented through hardware, or implemented by a processor executing instructions. The instructions may consist of corresponding modules stored in an RAM, a flash memory, an ROM, an EPROM, an EEPROM, a register, a hard disk, a mobile hard disk, a read-only optic disk, or any other known storage medium. Illustratively, the storage medium may be coupled to the processor, so that the processor is capable of reading information from the storage medium and writing information into the storage medium. Of course, the storage medium may be a component of the processor. The processor and the storage medium may be located in an application specific integrated circuit (Application Specific Integrated Circuit, ASIC). In addition, the ASIC may be located in an interface device of a core network. Of course, the processor and the storage medium may be located in the interface device of the core network as discrete assemblies.

It should be appreciated that, the functions described in one or more embodiments of the present disclosure may be achieved through hardware, software, firmware or a combination thereof. When the functions are achieved through software, these functions may be stored in the computer-readable medium or transmitted as one or more instructions or codes on the computer-readable medium. The computer-readable medium may include a computer-readable storage medium and a communication medium. The communication medium may include any medium capable of transmitting a computer program from one place to another place. The storage medium may include any available medium capable of being accessed by a general-purpose or dedicated computer.

The objects, the technical solutions and the beneficial effects of the present disclosure have been described hereinabove in details. It should be appreciated that, the above description may be for illustrative purposes only, but shall not be used to limit the scope of the present disclosure.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, compact disc-read only memory (Compact Disc-Read Only Memory, CD-ROM) and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

## Claims

1. A Physical Downlink Control Channel, PDCCH, monitoring method for a User Equipment, UE (11, 400), comprising:
acquiring (201) one or more bits in Downlink Control Information, DCI, transmitted through a first PDCCH monitored by the UE (11, 400), the one or more bits in the DCI of the first PDCCH indicating a not-to-be-monitored PDCCH and/or a to-be-monitored PDCCH; and
determining (202) the not-to-be-monitored PDCCH and/or the to-be-monitored PDCCH in accordance with the one or more bits in the DCI of the first PDCCH,
the PDCCH monitoring method is **characterized in that**
the one or more bits in the DCI transmitted through the first PDCCH are used to indicate the not-to-be-monitored PDCCH in at least one of the followings:
the one or more bits in the DCI transmitted through the first PDCCH are used to indicate the UE (11, 400) not to monitor, within subsequent N slots, a second PDCCH having a same DCI format as the first PDCCH or having a specific DCI format;
the one or more bits in the DCI transmitted through the first PDCCH are used to indicate the UE (11, 400) not to monitor, within subsequent N slots, a third PDCCH having a same Radio Network Temporary Identity, RNTI, as the first PDCCH or having a specific RNTI;
the one or more bits in the DCI transmitted through the first PDCCH are used to indicate the UE (11, 400) not to monitor, within subsequent N slots, a fourth PDCCH having a same Search Space, SS, as the first PDCCH or having a specific SS;
the one or more bits in the DCI transmitted through the first PDCCH are used to indicate the UE (11, 400) not to monitor, within subsequent N slots, a fifth PDCCH having a same SS type as the first PDCCH or having a specific SS type; and
the one or more bits in the DCI transmitted through the first PDCCH are used to indicate the UE (11, 400) not to monitor, within subsequent N slots, a sixth PDCCH having a same Control-Resource Set, CORESET, as the first PDCCH or having a specific CORESET,
wherein N is an integer greater than or equal to 1;
wherein the one or more bits in the DCI transmitted through the first PDCCH are used to indicate the to-be-monitored PDCCH in at least one of the followings:
the one or more bits in the DCI transmitted through the first PDCCH are used to indicate the UE (11, 400) to monitor, within a first slot subsequent to the subsequent N slots, a seventh PDCCH having a same DCI format as the first PDCCH or having a specific DCI format;
the one or more bits in the DCI transmitted through the first PDCCH are used to indicate the UE (11, 400) to monitor, within the first slot subsequent to the subsequent N slots, an eighth PDCCH having a same Radio Network Temporary Identity, RNTI, as the first PDCCH or having a specific RNTI;
the one or more bits in the DCI transmitted through the first PDCCH are used to indicate the UE (11, 400) to monitor, within the first slot subsequent to the subsequent N slots, a ninth PDCCH having a same Search Space, SS, as the first PDCCH or having a specific SS;
the one or more bits in the DCI transmitted through the first PDCCH are used to indicate the UE (11, 400) to monitor, within the first slot subsequent to the subsequent N slots, a tenth PDCCH having a same SS type as the first PDCCH or having a specific SS type; and
the one or more bits in the DCI transmitted through the first PDCCH are used to indicate the UE (11, 400) to monitor, within the first slot subsequent to the subsequent N slots, an eleventh PDCCH having a same Control-Resource Set, CORESET, as the first PDCCH or having a specific CORESET,
wherein N is an integer greater than or equal to 1.

2. The PDCCH monitoring method according to claim 1, further comprising:
receiving indication information from a network side device (10, 500), wherein the indication information is used to indicate the UE (11, 400) to monitor the first PDCCH or indicate that the first PDCCH has been configured by the network side device (10, 500) for the UE (11, 400), or the indication information is used to indicate the UE (11, 400) not to monitor the first PDCCH or indicate that the first PDCCH has not been configured by the network side device (10, 500) for the UE (11, 400).

3. The PDCCH monitoring method according to claim 1, wherein the one or more bits in the DCI transmitted through the first PDCCH are used to indicate the UE (11, 400) not to monitor, within the subsequent N slots, the second PDCCH having the same DCI format as the first PDCCH or having the specific DCI format in at least one of the followings:
the one or more bits in the DCI in a first DCI format or a second DCI format transmitted through the first PDCCH are used to indicate the UE (11, 400) not to monitor, within the subsequent N slots, the second PDCCH having the first DCI format or the second DCI format;
the one or more bits in the DCI in the first DCI format or a third DCI format transmitted through the first PDCCH are used to indicate the UE (11, 400) not to monitor, within the subsequent N slots, the second PDCCH having the first DCI format or the third DCI format;
the one or more bits in the DCI in the second DCI format or a fourth DCI format transmitted through the first PDCCH are used to indicate the UE (11, 400) not to monitor, within the subsequent N slots, the second PDCCH having the second DCI format or the fourth DCI format;
the one or more bits in the DCI in the second DCI format or the fourth DCI format transmitted through the first PDCCH are used to indicate the UE (11, 400) not to monitor, within the subsequent N slots, the second PDCCH having the first DCI format or the third DCI format;
the one or more bits in the DCI in the first DCI format or the third DCI format transmitted through the first PDCCH are used to indicate the UE (11, 400) not to monitor, within the subsequent N slots, the second PDCCH having the second DCI format or the fourth DCI format;
the one or more bits in the DCI in the first DCI format, the second DCI format, the third DCI format or the fourth DCI format transmitted through the first PDCCH are used to indicate the UE (11, 400) not to monitor, within the subsequent N slots, the second PDCCH having the first DCI format, the second DCI format, the third DCI format or the fourth DCI format; and
the one or more bits in the DCI in a fifth DCI format transmitted through the first PDCCH are used to indicate the UE (11, 400) not to monitor, within the subsequent N slots, the second PDCCH having the fifth DCI format,
wherein the first DCI format is used to schedule physical uplink shared channels for one cell, the second DCI format is used to schedule physical downlink shared channels for one cell, the third DCI format is used to schedule physical uplink shared channels for one cell, the fourth DCI format is used to schedule physical downlink shared channels for one cell, and the fifth DCI format is used to notify a group of slot formats of the UE (11, 400).

4. The PDCCH monitoring method according to claim 1, wherein the subsequent N slots comprise subsequent N slots which meet a monitoring periodicity and an offset value configured by the network side device (10, 500), or subsequent N downlink slots which meet the monitoring periodicity and the offset value configured by the network side device (10, 500).

5. The PDCCH monitoring method according to claim 1, wherein the one or more bits in the DCI transmitted through the first PDCCH are used to indicate the UE (11, 400) to monitor, within the first slot subsequent to the subsequent N slots, the seventh PDCCH having the same DCI format as the first PDCCH or having the specific DCI format in at least one of the followings:
the one or more bits in the DCI in a first DCI format or a second DCI format transmitted through the first PDCCH are used to indicate the UE (11, 400) to monitor, within the first slot subsequent to the subsequent N slots, the seventh PDCCH having the first DCI format or the second DCI format;
the one or more bits in the DCI in the first DCI format or a third DCI format transmitted through the first PDCCH are used to indicate the UE (11, 400) to monitor, within the first slot subsequent to the subsequent N slots, the seventh PDCCH having the first DCI format or the third DCI format;
the one or more bits in the DCI in the second DCI format or a fourth DCI format transmitted through the first PDCCH are used to indicate the UE (11, 400) to monitor, within the first slot subsequent to the subsequent N slots, the seventh PDCCH having the second DCI format or the fourth DCI format;
the one or more bits in the DCI in the second DCI format or the fourth DCI format transmitted through the first PDCCH are used to indicate the UE (11, 400) to monitor, within the first slot subsequent to the subsequent N slots, the seventh PDCCH having the first DCI format or the third DCI format;
the one or more bits in the DCI in the first DCI format or the third DCI format transmitted through the first PDCCH are used to indicate the UE (11, 400) to monitor, within the first slot subsequent to the subsequent N slots, the second PDCCH having the second DCI format or the fourth DCI format;
the one or more bits in the DCI in the first DCI format, the second DCI format, the third DCI format or the fourth DCI format transmitted through the first PDCCH are used to indicate the UE (11, 400) to monitor, within the first slot subsequent to the subsequent N slots, the seventh PDCCH having the first DCI format, the second DCI format, the third DCI format or the fourth DCI format; and
the one or more bits in the DCI in a fifth DCI format transmitted through the first PDCCH are used to indicate the UE (11, 400) to monitor, within the first slot subsequent to the subsequent N slots, the seventh PDCCH having the fifth DCI format,
wherein the first DCI format is used to schedule physical uplink shared channels for one cell, the second DCI format is used to schedule physical downlink shared channels for one cell, the third DCI format is used to schedule physical uplink shared channels for one cell, the fourth DCI format is used to schedule physical downlink shared channels for one cell, and the fifth DCI format is used to notify a group of slot formats of the UE (11, 400).

6. The PDCCH monitoring method according to claim 1, wherein the first slot subsequent to the subsequent N slots is a first slot that meets the monitoring periodicity and the offset value configured by the network side device (10, 500) subsequent to the subsequent N slots that meets the monitoring periodicity and the offset value configured by the network side device (10, 500), or a first downlink slot that meets the monitoring periodicity and the offset value configured by the network side device (10, 500) subsequent to the subsequent N slots that meets the monitoring periodicity and the offset value configured by the network side device (10, 500).

7. The PDCCH monitoring method according to claim 1, wherein when the one or more bits in the DCI transmitted through the first PDCCH indicates the to-be-monitored PDCCH, the one or more bits in the DCI transmitted through the first PDCCH are used to indicate a default monitoring behavior of the UE (11, 400) for monitoring the PDCCH,
wherein the default monitoring behavior at least comprises monitoring, by the UE (11, 400), the PDCCH within a next slot or downlink slot that meets the monitoring periodicity and the offset value configured by the network side device (10, 500).

8. The PDCCH monitoring method according to claim 1, wherein the one or more bits in the DCI transmitted through the first PDCCH are used to indicate the UE (11, 400) not to monitor, within the subsequent N slots, the fifth PDCCH having the same SS type as the first PDCCH or having the specific SS type in at least one of the followings:
the one or more bits in the DCI transmitted through the first PDCCH having a first common SS type are used to indicate the UE (11, 400) not to monitor, within the subsequent N slots, the fifth PDCCH having the first common SS type;
the one or more bits in the DCI transmitted through the first PDCCH having a second common SS type are used to indicate the UE (11, 400) not to monitor, within the subsequent N slots, the fifth PDCCH having the second common SS type;
the one or more bits in the DCI transmitted through the first PDCCH having a third common SS type are used to indicate the UE (11, 400) not to monitor, within the subsequent N slots, the fifth PDCCH having the third common SS type;
the one or more bits in the DCI transmitted through the first PDCCH having a fourth common SS type are used to indicate the UE (11, 400) not to monitor, within the subsequent N slots, the fifth PDCCH having the fourth common SS type;
the one or more bits in the DCI transmitted through the first PDCCH having a UE-Specific Search Space, UE SS, are used to indicate the UE (11, 400) not to monitor, within the subsequent N slots, the fifth PDCCH having the UE SS type; and
the one or more bits in the DCI transmitted through the first PDCCH having the first SS type are used to indicate the UE (11, 400) not to monitor, within the subsequent N slots, the fifth PDCCH having the second SS type.

9. A PDCCH configuration method for a network side device (10, 500), comprising:
configuring (301) one or more bits in DCI transmitted through a first PDCCH, the one or more bits in the DCI of the first PDCCH indicating a not-to-be-monitored PDCCH by a UE (11, 400) and/or a to-be-monitored PDCCH by the UE (11, 400),
the PDCCH configuration method is **characterized in that** the one or more bits in the DCI transmitted through the first PDCCH are used to indicate the not-to-be-monitored PDCCH in at least one of the followings:
the one or more bits in the DCI transmitted through the first PDCCH are used to indicate the UE (11, 400) not to monitor, within subsequent N slots, a second PDCCH having a same DCI format as the first PDCCH or having a specific DCI format;
the one or more bits in the DCI transmitted through the first PDCCH are used to indicate the UE (11, 400) not to monitor, within subsequent N slots, a third PDCCH having a same Radio Network Temporary Identity, RNTI, as the first PDCCH or having a specific RNTI;
the one or more bits in the DCI transmitted through the first PDCCH are used to indicate the UE (11, 400) not to monitor, within subsequent N slots, a fourth PDCCH having a same Search Space, SS, as the first PDCCH or having a specific SS;
the one or more bits in the DCI transmitted through the first PDCCH are used to indicate the UE (11, 400) not to monitor, within subsequent N slots, a fifth PDCCH having a same SS type as the first PDCCH or having a specific SS type; and
the one or more bits in the DCI transmitted through the first PDCCH are used to indicate the UE (11, 400) not to monitor, within subsequent N slots, a sixth PDCCH having a same Control-Resource Set, CORESET, as the first PDCCH or having a specific CORESET,
wherein N is an integer greater than or equal to 1;
wherein the one or more bits in the DCI transmitted through the first PDCCH are used to indicate the to-be-monitored PDCCH in at least one of the followings:
the one or more bits in the DCI transmitted through the first PDCCH are used to indicate the UE (11, 400) to monitor, within a first slot subsequent to the subsequent N slots, a seventh PDCCH having a same DCI format as the first PDCCH or having a specific DCI format;
the one or more bits in the DCI transmitted through the first PDCCH are used to indicate the UE (11, 400) to monitor, within the first slot subsequent to the subsequent N slots, an eighth PDCCH having a same Radio Network Temporary Identity, RNTI, as the first PDCCH or having a specific RNTI;
the one or more bits in the DCI transmitted through the first PDCCH are used to indicate the UE (11, 400) to monitor, within the first slot subsequent to the subsequent N slots, a ninth PDCCH having a same SS as the first PDCCH or having a specific SS;
the one or more bits in the DCI transmitted through the first PDCCH are used to indicate the UE (11, 400) to monitor, within the first slot subsequent to the subsequent N slots, a tenth PDCCH having a same Search Space, SS, type as the first PDCCH or having a specific SS type; and
the one or more bits in the DCI transmitted through the first PDCCH are used to indicate the UE (11, 400) to monitor, within the first slot subsequent to the subsequent N slots, an eleventh PDCCH having a same Control-Resource Set, CORESET, as the first PDCCH or having a specific CORESET,
wherein N is an integer greater than or equal to 1.

10. A User Equipment, UE (11, 400), comprising:
an acquisition module (401) configured to acquire one or more bits in DCI transmitted through a first PDCCH monitored by the UE (11, 400), the one or more bits in the DCI of the first PDCCH indicating a not-to-be-monitored PDCCH and/or a to-be-monitored PDCCH; and
a determination module (402) configured to determine the not-to-be-monitored PDCCH and/or the to-be-monitored PDCCH in accordance with the one or more bits in the DCI of the first PDCCH,
the UE (11, 400) is **characterized in that**
the one or more bits in the DCI transmitted through the first PDCCH are used to indicate the not-to-be-monitored PDCCH in at least one of the followings:
the one or more bits in the DCI transmitted through the first PDCCH are used to indicate the UE (11, 400) not to monitor, within subsequent N slots, a second PDCCH having a same DCI format as the first PDCCH or having a specific DCI format;
the one or more bits in the DCI transmitted through the first PDCCH are used to indicate the UE (11, 400) not to monitor, within subsequent N slots, a third PDCCH having a same Radio Network Temporary Identity, RNTI, as the first PDCCH or having a specific RNTI;
the one or more bits in the DCI transmitted through the first PDCCH are used to indicate the UE (11, 400) not to monitor, within subsequent N slots, a fourth PDCCH having a same Search Space, SS, as the first PDCCH or having a specific SS;
the one or more bits in the DCI transmitted through the first PDCCH are used to indicate the UE (11, 400) not to monitor, within subsequent N slots, a fifth PDCCH having a same SS type as the first PDCCH or having a specific SS type; and
the one or more bits in the DCI transmitted through the first PDCCH are used to indicate the UE (11, 400) not to monitor, within subsequent N slots, a sixth PDCCH having a same Control-Resource Set, CORESET, as the first PDCCH or having a specific CORESET,
wherein N is an integer greater than or equal to 1;
wherein the one or more bits in the DCI transmitted through the first PDCCH are used to indicate the to-be-monitored PDCCH in at least one of the followings:
the one or more bits in the DCI transmitted through the first PDCCH are used to indicate the UE (11, 400) to monitor, within a first slot subsequent to the subsequent N slots, a seventh PDCCH having a same DCI format as the first PDCCH or having a specific DCI format;
the one or more bits in the DCI transmitted through the first PDCCH are used to indicate the UE (11, 400) to monitor, within the first slot subsequent to the subsequent N slots, an eighth PDCCH having a same Radio Network Temporary Identity, RNTI, as the first PDCCH or having a specific RNTI;
the one or more bits in the DCI transmitted through the first PDCCH are used to indicate the UE (11, 400) to monitor, within the first slot subsequent to the subsequent N slots, a ninth PDCCH having a same Search Space, SS, as the first PDCCH or having a specific SS;
the one or more bits in the DCI transmitted through the first PDCCH are used to indicate the UE (11, 400) to monitor, within the first slot subsequent to the subsequent N slots, a tenth PDCCH having a same SS type as the first PDCCH or having a specific SS type; and
the one or more bits in the DCI transmitted through the first PDCCH are used to indicate the UE (11, 400) to monitor, within the first slot subsequent to the subsequent N slots, an eleventh PDCCH having a same Control-Resource Set, CORESET, as the first PDCCH or having a specific CORESET,
wherein N is an integer greater than or equal to 1.

11. The UE (11, 400) according to claim 10, wherein the UE (11, 400) is further configured to:
receive indication information from a network side device (10, 500), wherein the indication information is used to indicate the UE (11, 400) to monitor the first PDCCH or indicate that the first PDCCH has been configured by the network side device (10, 500) for the UE (11, 400), or the indication information is used to indicate the UE (11, 400) not to monitor the first PDCCH or indicate that the first PDCCH has not been configured by the network side device (10, 500) for the UE (11, 400).

12. The UE (11, 400) according to claim 10, wherein the one or more bits in the DCI transmitted through the first PDCCH are used to indicate the UE (11, 400) not to monitor, within the subsequent N slots, the second PDCCH having the same DCI format as the first PDCCH or having the specific DCI format in at least one of the followings:
the one or more bits in the DCI in a first DCI format or a second DCI format transmitted through the first PDCCH are used to indicate the UE (11, 400) not to monitor, within the subsequent N slots, the second PDCCH having the first DCI format or the second DCI format;
the one or more bits in the DCI in the first DCI format or a third DCI format transmitted through the first PDCCH are used to indicate the UE (11, 400) not to monitor, within the subsequent N slots, the second PDCCH having the first DCI format or the third DCI format;
the one or more bits in the DCI in the second DCI format or a fourth DCI format transmitted through the first PDCCH are used to indicate the UE (11, 400) not to monitor, within the subsequent N slots, the second PDCCH having the second DCI format or the fourth DCI format;
the one or more bits in the DCI in the second DCI format or the fourth DCI format transmitted through the first PDCCH are used to indicate the UE (11, 400) not to monitor, within the subsequent N slots, the second PDCCH having the first DCI format or the third DCI format;
the one or more bits in the DCI in the first DCI format or the third DCI format transmitted through the first PDCCH are used to indicate the UE (11, 400) not to monitor, within the subsequent N slots, the second PDCCH having the second DCI format or the fourth DCI format;
the one or more bits in the DCI in the first DCI format, the second DCI format, the third DCI format or the fourth DCI format transmitted through the first PDCCH are used to indicate the UE (11, 400) not to monitor, within the subsequent N slots, the second PDCCH having the first DCI format, the second DCI format, the third DCI format or the fourth DCI format; and
the one or more bits in the DCI in a fifth DCI format transmitted through the first PDCCH are used to indicate the UE (11, 400) not to monitor, within the subsequent N slots, the second PDCCH having the fifth DCI format,
wherein the first DCI format is used to schedule physical uplink shared channels for one cell, the second DCI format is used to schedule physical downlink shared channels for one cell, the third DCI format is used to schedule physical uplink shared channels for one cell, the fourth DCI format is used to schedule physical downlink shared channels for one cell, and the fifth DCI format is used to notify a group of slot formats of the UE (11, 400).

13. The UE (11, 400) according to claim 10, wherein the one or more bits in the DCI transmitted through the first PDCCH are used to indicate the UE (11, 400) to monitor, within the first slot subsequent to the subsequent N slots, the seventh PDCCH having the same DCI format as the first PDCCH or having the specific DCI format in at least one of the followings:
the one or more bits in the DCI in a first DCI format or a second DCI format transmitted through the first PDCCH are used to indicate the UE (11, 400) to monitor, within the first slot subsequent to the subsequent N slots, the seventh PDCCH having the first DCI format or the second DCI format;
the one or more bits in the DCI in the first DCI format or a third DCI format transmitted through the first PDCCH are used to indicate the UE (11, 400) to monitor, within the first slot subsequent to the subsequent N slots, the seventh PDCCH having the first DCI format or the third DCI format;
the one or more bits in the DCI in the second DCI format or a fourth DCI format transmitted through the first PDCCH are used to indicate the UE (11, 400) to monitor, within the first slot subsequent to the subsequent N slots, the seventh PDCCH having the second DCI format or the fourth DCI format;
the one or more bits in the DCI in the second DCI format or the fourth DCI format transmitted through the first PDCCH are used to indicate the UE (11, 400) to monitor, within the first slot subsequent to the subsequent N slots, the seventh PDCCH having the first DCI format or the third DCI format;
the one or more bits in the DCI in the first DCI format or the third DCI format transmitted through the first PDCCH are used to indicate the UE (11, 400) to monitor, within the first slot subsequent to the subsequent N slots, the second PDCCH having the second DCI format or the fourth DCI format;
the one or more bits in the DCI in the first DCI format, the second DCI format, the third DCI format or the fourth DCI format transmitted through the first PDCCH are used to indicate the UE (11, 400) to monitor, within the first slot subsequent to the subsequent N slots, the seventh PDCCH having the first DCI format, the second DCI format, the third DCI format or the fourth DCI format; and
the one or more bits in the DCI in a fifth DCI format transmitted through the first PDCCH are used to indicate the UE (11, 400) to monitor, within the first slot subsequent to the subsequent N slots, the seventh PDCCH having the fifth DCI format,
wherein the first DCI format is used to schedule physical uplink shared channels for one cell, the second DCI format is used to schedule physical downlink shared channels for one cell, the third DCI format is used to schedule physical uplink shared channels for one cell, the fourth DCI format is used to schedule physical downlink shared channels for one cell, and the fifth DCI format is used to notify a group of slot formats of the UE (11, 400).

14. The UE (11, 400) according to claim 10, wherein the one or more bits in the DCI transmitted through the first PDCCH are used to indicate the UE (11, 400) not to monitor, within the subsequent N slots, the fifth PDCCH having the same SS type as the first PDCCH or having the specific SS type in at least one of the followings:
the one or more bits in the DCI transmitted through the first PDCCH having a first common SS type are used to indicate the UE (11, 400) not to monitor, within the subsequent N slots, the fifth PDCCH having the first common SS type;
the one or more bits in the DCI transmitted through the first PDCCH having a second common SS type are used to indicate the UE (11, 400) not to monitor, within the subsequent N slots, the fifth PDCCH having the second common SS type;
the one or more bits in the DCI transmitted through the first PDCCH having a third common SS type are used to indicate the UE (11, 400) not to monitor, within the subsequent N slots, the fifth PDCCH having the third common SS type;
the one or more bits in the DCI transmitted through the first PDCCH having a fourth common SS type are used to indicate the UE (11, 400) not to monitor, within the subsequent N slots, the fifth PDCCH having the fourth common SS type;
the one or more bits in the DCI transmitted through the first PDCCH having a UE-Specific Search Space, UE SS, are used to indicate the UE (11, 400) not to monitor, within the subsequent N slots, the fifth PDCCH having the UE SS type; and
the one or more bits in the DCI transmitted through the first PDCCH having the first SS type are used to indicate the UE (11, 400) not to monitor, within the subsequent N slots, the fifth PDCCH having the second SS type.

15. A network side device (10, 500), comprising:
a configuration module (501) configured to configure one or more bits in DCI transmitted through a first PDCCH, the one or more bits in the DCI of the first PDCCH indicating a not-to-be-monitored PDCCH by a UE (11, 400) and/or a to-be-monitored PDCCH by the UE (11, 400),
the network side device (10, 500) is **characterized by**
wherein the one or more bits in the DCI transmitted through the first PDCCH are used to indicate the not-to-be-monitored PDCCH in at least one of the followings:
the one or more bits in the DCI transmitted through the first PDCCH are used to indicate the UE (11, 400) not to monitor, within subsequent N slots, a second PDCCH having a same DCI format as the first PDCCH or having a specific DCI format;
the one or more bits in the DCI transmitted through the first PDCCH are used to indicate the UE (11, 400) not to monitor, within subsequent N slots, a third PDCCH having a same Radio Network Temporary Identity, RNTI, as the first PDCCH or having a specific RNTI;
the one or more bits in the DCI transmitted through the first PDCCH are used to indicate the UE (11, 400) not to monitor, within subsequent N slots, a fourth PDCCH having a same Search Space, SS, as the first PDCCH or having a specific SS;
the one or more bits in the DCI transmitted through the first PDCCH are used to indicate the UE (11, 400) not to monitor, within subsequent N slots, a fifth PDCCH having a same SS type as the first PDCCH or having a specific SS type; and
the one or more bits in the DCI transmitted through the first PDCCH are used to indicate the UE (11, 400) not to monitor, within subsequent N slots, a sixth PDCCH having a same Control-Resource Set, CORESET, as the first PDCCH or having a specific CORESET,
wherein N is an integer greater than or equal to 1;
wherein the one or more bits in the DCI transmitted through the first PDCCH are used to indicate the to-be-monitored PDCCH in at least one of the followings:
the one or more bits in the DCI transmitted through the first PDCCH are used to indicate the UE (11, 400) to monitor, within a first slot subsequent to the subsequent N slots, a seventh PDCCH having a same DCI format as the first PDCCH or having a specific DCI format;
the one or more bits in the DCI transmitted through the first PDCCH are used to indicate the UE (11, 400) to monitor, within the first slot subsequent to the subsequent N slots, an eighth PDCCH having a same Radio Network Temporary Identity, RNTI, as the first PDCCH or having a specific RNTI;
the one or more bits in the DCI transmitted through the first PDCCH are used to indicate the UE (11, 400) to monitor, within the first slot subsequent to the subsequent N slots, a ninth PDCCH having a same Search Space, SS, as the first PDCCH or having a specific SS;
the one or more bits in the DCI transmitted through the first PDCCH are used to indicate the UE (11, 400) to monitor, within the first slot subsequent to the subsequent N slots, a tenth PDCCH having a same SS type as the first PDCCH or having a specific SS type; and
the one or more bits in the DCI transmitted through the first PDCCH are used to indicate the UE (11, 400) to monitor, within the first slot subsequent to the subsequent N slots, an eleventh PDCCH having a same Control-Resource Set, CORESET, as the first PDCCH or having a specific CORESET,
wherein N is an integer greater than or equal to 1.

## Patentansprüche

1. Verfahren zur Überwachung eines physikalischen Downlink-Steuerkanals, PDCCH, für ein Benutzergerät, UE (11, 400), umfassend:
Erfassen (201) eines oder mehrerer Bits in Downlink-Steuerinformationen, DCI, die über einen ersten PDCCH übertragen werden, der von dem UE (11, 400) überwacht wird, wobei das eine oder die mehreren Bits in den DCI des ersten PDCCH einen nicht zu überwachenden PDCCH und/oder einen zu überwachenden PDCCH anzeigen; und
Bestimmen (202) des nicht zu überwachenden PDCCH und/oder des zu überwachenden PDCCH gemäß dem einen oder den mehreren Bits in den DCI des ersten PDCCH,
das Verfahren zur PDCCH-Überwachung ist **dadurch gekennzeichnet, dass**
das eine oder die mehreren Bits in den über den ersten PDCCH übertragenen DCI verwendet werden, um den nicht zu überwachenden PDCCH in mindestens einem der folgenden Fälle anzuzeigen:
das eine oder die mehreren Bits in den über den ersten PDCCH übertragenen DCI werden verwendet, um dem UE (11, 400) anzuzeigen, innerhalb nachfolgender N Slots einen zweiten PDCCH mit demselben DCI-Format wie der erste PDCCH oder mit einem spezifischen DCI-Format nicht zu überwachen;
das eine oder die mehreren Bits in den über den ersten PDCCH übertragenen DCI werden verwendet, um dem UE (11, 400) anzuzeigen, innerhalb nachfolgender N Slots einen dritten PDCCH mit derselben temporären Funknetzkennung, RNTI, wie der erste PDCCH oder mit einer spezifischen RNTI nicht zu überwachen;
das eine oder die mehreren Bits in den über den ersten PDCCH übertragenen DCI werden verwendet, um dem UE (11, 400) anzuzeigen, innerhalb nachfolgender N Slots einen vierten PDCCH mit demselben Suchraum, SS, wie der erste PDCCH oder mit einem spezifischen SS nicht zu überwachen;
das eine oder die mehreren Bits in den über den ersten PDCCH übertragenen DCI werden verwendet, um dem UE (11, 400) anzuzeigen, innerhalb nachfolgender N Slots einen fünften PDCCH mit demselben Suchraumtyp wie der erste PDCCH oder mit einem spezifischen Suchraumtyp nicht zu überwachen; und
das eine oder die mehreren Bits in den über den ersten PDCCH übertragenen DCI werden verwendet, um dem UE (11, 400) anzuzeigen, innerhalb nachfolgender N Slots einen sechsten PDCCH mit demselben Steuerressourcensatz, CORESET, wie der erste PDCCH oder mit einem spezifischen CORESET nicht zu überwachen,
wobei N eine ganze Zahl größer als oder gleich 1 ist;
wobei das eine oder die mehreren Bits in den über den ersten PDCCH übertragenen DCI verwendet werden, um den zu überwachenden PDCCH in mindestens einem der folgenden Fälle anzuzeigen:
das eine oder die mehreren Bits in den über den ersten PDCCH übertragenen DCI werden verwendet, um dem UE (11, 400) anzuzeigen, innerhalb eines ersten Slots nach den nachfolgenden N Slots einen siebten PDCCH mit demselben DCI-Format wie der erste PDCCH oder mit einem spezifischen DCI-Format zu überwachen;
das eine oder die mehreren Bits in den über den ersten PDCCH übertragenen DCI werden verwendet, um dem UE (11, 400) anzuzeigen, innerhalb des ersten Slots nach den nachfolgenden N Slots einen achten PDCCH mit derselben temporären Funknetzkennung, RNTI, wie der erste PDCCH oder mit einer spezifischen RNTI zu überwachen;
das eine oder die mehreren Bits in den über den ersten PDCCH übertragenen DCI werden verwendet, um dem UE (11, 400) anzuzeigen, innerhalb des ersten Slots nach den nachfolgenden N Slots einen neunten PDCCH mit demselben Suchraum, SS, wie der erste PDCCH oder mit einem spezifischen SS zu überwachen;
das eine oder die mehreren Bits in den über den ersten PDCCH übertragenen DCI werden verwendet, um dem UE (11, 400) anzuzeigen, innerhalb des ersten Slots nach den nachfolgenden N Slots einen zehnten PDCCH mit demselben Suchraumtyp wie der erste PDCCH oder mit einem spezifischen Suchraumtyp zu überwachen; und
das eine oder die mehreren Bits in den über den ersten PDCCH übertragenen DCI werden verwendet, um dem UE (11, 400) anzuzeigen, innerhalb des ersten Slots nach den nachfolgenden N Slots einen elften PDCCH mit demselben Steuerressourcensatz, CORESET, wie der erste PDCCH oder mit einem spezifischen CORESET zu überwachen,
wobei N eine ganze Zahl größer als oder gleich 1 ist.

2. Verfahren zur PDCCH-Überwachung nach Anspruch 1, ferner umfassend:
Empfangen von Anzeigeinformationen von einer netzseitigen Vorrichtung (10, 500), wobei die Anzeigeinformationen verwendet werden, um dem UE (11, 400) anzuzeigen, den ersten PDCCH zu überwachen, oder anzuzeigen, dass der erste PDCCH von der netzseitigen Vorrichtung (10, 500) für das UE (11, 400) konfiguriert wurde, oder die Anzeigeinformationen verwendet werden, um dem UE (11, 400) anzuzeigen, den ersten PDCCH nicht zu überwachen, oder anzuzeigen, dass der erste PDCCH von der netzseitigen Vorrichtung (10, 500) für das UE (11, 400) nicht konfiguriert wurde.

3. Verfahren zur PDCCH-Überwachung nach Anspruch 1, wobei das eine oder die mehreren Bits in den über den ersten PDCCH übertragenen DCI verwendet werden, um dem UE (11, 400) in mindestens einem der folgenden Fälle anzuzeigen, innerhalb der nachfolgenden N Slots den zweiten PDCCH mit demselben DCI-Format wie der erste PDCCH oder mit dem spezifischen DCI-Format nicht zu überwachen:
das eine oder die mehreren Bits in den DCI in einem ersten DCI-Format oder einem zweiten DCI-Format, die über den ersten PDCCH übertragen werden, werden verwendet, um dem UE (11, 400) anzuzeigen, innerhalb der nachfolgenden N Slots den zweiten PDCCH mit dem ersten DCI-Format oder dem zweiten DCI-Format nicht zu überwachen;
das eine oder die mehreren Bits in den DCI in dem ersten DCI-Format oder einem dritten DCI-Format, die über den ersten PDCCH übertragen werden, werden verwendet, um dem UE (11, 400) anzuzeigen, innerhalb der nachfolgenden N Slots den zweiten PDCCH mit dem ersten DCI-Format oder dem dritten DCI-Format nicht zu überwachen;
das eine oder die mehreren Bits in den DCI in dem zweiten DCI-Format oder einem vierten DCI-Format, die über den ersten PDCCH übertragen werden, werden verwendet, um dem UE (11, 400) anzuzeigen, innerhalb der nachfolgenden N Slots den zweiten PDCCH mit dem zweiten DCI-Format oder dem vierten DCI-Format nicht zu überwachen;
das eine oder die mehreren Bits in den DCI in dem zweiten DCI-Format oder dem vierten DCI-Format, die über den ersten PDCCH übertragen werden, werden verwendet, um dem UE (11, 400) anzuzeigen, innerhalb der nachfolgenden N Slots den zweiten PDCCH mit dem ersten DCI-Format oder dem dritten DCI-Format nicht zu überwachen;
das eine oder die mehreren Bits in den DCI in dem ersten DCI-Format oder dem dritten DCI-Format, die über den ersten PDCCH übertragen werden, werden verwendet, um dem UE (11, 400) anzuzeigen, innerhalb der nachfolgenden N Slots den zweiten PDCCH mit dem zweiten DCI-Format oder dem vierten DCI-Format nicht zu überwachen;
das eine oder die mehreren Bits in den DCI in dem ersten DCI-Format, dem zweiten DCI-Format, dem dritten DCI-Format oder dem vierten DCI-Format, die über den ersten PDCCH übertragen werden, werden verwendet, um dem UE (11, 400) anzuzeigen, innerhalb der nachfolgenden N Slots den zweiten PDCCH mit dem ersten DCI-Format, dem zweiten DCI-Format, dem dritten DCI-Format oder dem vierten DCI-Format nicht zu überwachen; und
das eine oder die mehreren Bits in den DCI in einem fünften DCI-Format, die über den ersten PDCCH übertragen werden, werden verwendet, um dem UE (11, 400) anzuzeigen, innerhalb der nachfolgenden N Slots den zweiten PDCCH mit dem fünften DCI-Format nicht zu überwachen,
wobei das erste DCI-Format verwendet wird, um physikalische gemeinsam genutzte Uplink-Kanäle für eine Zelle einzuplanen, das zweite DCI-Format verwendet wird, um physikalische gemeinsam genutzte Downlink-Kanäle für eine Zelle einzuplanen, das dritte DCI-Format verwendet wird, um physikalische gemeinsam genutzte Uplink-Kanäle für eine Zelle einzuplanen, das vierte DCI-Format verwendet wird, um physikalische gemeinsam genutzte Downlink-Kanäle für eine Zelle einzuplanen, und das fünfte DCI-Format verwendet wird, um eine Gruppe von Slot-Formaten des UE (11, 400) mitzuteilen.

4. Verfahren zur PDCCH-Überwachung nach Anspruch 1, wobei die nachfolgenden N Slots nachfolgende N Slots umfassen, die eine von der netzseitigen Vorrichtung (10, 500) konfigurierte Überwachungsperiodizität und einen von der netzseitigen Vorrichtung (10, 500) konfigurierten Offsetwert erfüllen, oder nachfolgende N Downlink-Slots, die die von der netzseitigen Vorrichtung (10, 500) konfigurierte Überwachungsperiodizität und den von der netzseitigen Vorrichtung (10, 500) konfigurierten Offsetwert erfüllen.

5. Verfahren zur PDCCH-Überwachung nach Anspruch 1, wobei das eine oder die mehreren Bits in den über den ersten PDCCH übertragenen DCI verwendet werden, um dem UE (11, 400) in mindestens einem der folgenden Fälle anzuzeigen, innerhalb des ersten Slots nach den nachfolgenden N Slots den siebten PDCCH mit demselben DCI-Format wie der erste PDCCH oder mit dem spezifischen DCI-Format zu überwachen:
das eine oder die mehreren Bits in den DCI (Downlink-Steuerinformationen) in einem ersten DCI-Format oder einem zweiten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH (physikalischer Downlink-Steuerkanal) mit dem ersten DCI-Format oder dem zweiten DCI-Format zu überwachen;
das eine oder die mehreren Bits in den DCI (Downlink-Steuerinformationen) im ersten DCI-Format oder in einem dritten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH (physikalischer Downlink-Steuerkanal) mit dem ersten DCI-Format oder dem dritten DCI-Format zu überwachen;
das eine oder die mehreren Bits in den DCI (Downlink-Steuerinformationen) im zweiten DCI-Format oder in einem vierten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH (physikalischer Downlink-Steuerkanal) mit dem zweiten DCI-Format oder dem vierten DCI-Format zu überwachen;
das eine oder die mehreren Bits in den DCI (Downlink-Steuerinformationen) im zweiten DCI-Format oder im vierten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH (physikalischer Downlink-Steuerkanal) mit dem ersten DCI-Format oder dem dritten DCI-Format zu überwachen;
das eine oder die mehreren Bits in den DCI (Downlink-Steuerinformationen) im ersten DCI-Format oder im dritten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den zweiten PDCCH (physikalischer Downlink-Steuerkanal) mit dem zweiten DCI-Format oder dem vierten DCI-Format zu überwachen;
das eine oder die mehreren Bits in den DCI (Downlink-Steuerinformationen) im ersten DCI-Format, im zweiten DCI-Format, im dritten DCI-Format oder im vierten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH (physikalischer Downlink-Steuerkanal) mit dem ersten DCI-Format, dem zweiten DCI-Format, dem dritten DCI-Format oder dem vierten DCI-Format zu überwachen; und
das eine oder die mehreren Bits in den DCI (Downlink-Steuerinformationen) in einem fünften DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH (physikalischer Downlink-Steuerkanal) mit dem fünften DCI-Format zu überwachen,
wobei das erste DCI-Format verwendet wird, um gemeinsam genutzte physikalische Uplink-Kanäle für eine Zelle einzuplanen, das zweite DCI-Format verwendet wird, um gemeinsam genutzte physikalische Downlink-Kanäle für eine Zelle einzuplanen, das dritte DCI-Format verwendet wird, um gemeinsam genutzte physikalische Uplink-Kanäle für eine Zelle einzuplanen, das vierte DCI-Format verwendet wird, um gemeinsam genutzte physikalische Downlink-Kanäle für eine Zelle einzuplanen, und das fünfte DCI-Format verwendet wird, um eine Gruppe von Slot-Formaten des UE (Benutzergerät) (11, 400) zu benachrichtigen.

6. Das PDCCH-Überwachungsverfahren nach Anspruch 1, wobei der erste Slot nach den nachfolgenden N Slots ein erster Slot ist, der die Überwachungsperiodizität und den durch die netzseitige Vorrichtung (10, 500) konfigurierten Offsetwert erfüllt, nach den nachfolgenden N Slots, die die Überwachungsperiodizität und den durch die netzseitige Vorrichtung (10, 500) konfigurierten Offsetwert erfüllen, oder ein erster Downlink-Slot ist, der die Überwachungsperiodizität und den durch die netzseitige Vorrichtung (10, 500) konfigurierten Offsetwert erfüllt, nach den nachfolgenden N Slots, die die Überwachungsperiodizität und den durch die netzseitige Vorrichtung (10, 500) konfigurierten Offsetwert erfüllen.

7. Das PDCCH-Überwachungsverfahren nach Anspruch 1, wobei, wenn das eine oder die mehreren Bits in den über den ersten PDCCH (physikalischer Downlink-Steuerkanal) übertragenen DCI (Downlink-Steuerinformationen) den zu überwachenden PDCCH (physikalischer Downlink-Steuerkanal) anzeigen, das eine oder die mehreren Bits in den über den ersten PDCCH (physikalischer Downlink-Steuerkanal) übertragenen DCI (Downlink-Steuerinformationen) verwendet werden, um ein standardmäßiges Überwachungsverhalten des UE (Benutzergerät) (11, 400) zum Überwachen des PDCCH (physikalischer Downlink-Steuerkanal) anzuzeigen,
wobei das standardmäßige Überwachungsverhalten zumindest das Überwachen des PDCCH (physikalischer Downlink-Steuerkanal) durch das UE (Benutzergerät) (11, 400) innerhalb eines nächsten Slots oder Downlink-Slots umfasst, der die Überwachungsperiodizität und den durch die netzseitige Vorrichtung (10, 500) konfigurierten Offsetwert erfüllt.

8. Das PDCCH-Überwachungsverfahren nach Anspruch 1, wobei das eine oder die mehreren Bits in den über den ersten PDCCH (physikalischer Downlink-Steuerkanal) übertragenen DCI (Downlink-Steuerinformationen) verwendet werden, um dem UE (Benutzergerät) (11, 400) anzuzeigen, innerhalb der nachfolgenden N Slots den fünften PDCCH (physikalischer Downlink-Steuerkanal) mit demselben Suchraumtyp wie der erste PDCCH (physikalischer Downlink-Steuerkanal) oder mit dem spezifischen Suchraumtyp in mindestens einem der folgenden Fälle nicht zu überwachen:
das eine oder die mehreren Bits in den über den ersten PDCCH (physikalischer Downlink-Steuerkanal) mit einem ersten gemeinsamen Suchraumtyp übertragenen DCI (Downlink-Steuerinformationen) werden verwendet, um dem UE (Benutzergerät) (11, 400) anzuzeigen, innerhalb der nachfolgenden N Slots den fünften PDCCH (physikalischer Downlink-Steuerkanal) mit dem ersten gemeinsamen Suchraumtyp nicht zu überwachen;
das eine oder die mehreren Bits in den über den ersten PDCCH (physikalischer Downlink-Steuerkanal) mit einem zweiten gemeinsamen Suchraumtyp übertragenen DCI (Downlink-Steuerinformationen) werden verwendet, um dem UE (Benutzergerät) (11, 400) anzuzeigen, innerhalb der nachfolgenden N Slots den fünften PDCCH (physikalischer Downlink-Steuerkanal) mit dem zweiten gemeinsamen Suchraumtyp nicht zu überwachen;
das eine oder die mehreren Bits in den über den ersten PDCCH (physikalischer Downlink-Steuerkanal) mit einem dritten gemeinsamen Suchraumtyp übertragenen DCI (Downlink-Steuerinformationen) werden verwendet, um dem UE (Benutzergerät) (11, 400) anzuzeigen, innerhalb der nachfolgenden N Slots den fünften PDCCH (physikalischer Downlink-Steuerkanal) mit dem dritten gemeinsamen Suchraumtyp nicht zu überwachen;
das eine oder die mehreren Bits in den über den ersten PDCCH (physikalischer Downlink-Steuerkanal) mit einem vierten gemeinsamen Suchraumtyp übertragenen DCI (Downlink-Steuerinformationen) werden verwendet, um dem UE (Benutzergerät) (11, 400) anzuzeigen, innerhalb der nachfolgenden N Slots den fünften PDCCH (physikalischer Downlink-Steuerkanal) mit dem vierten gemeinsamen Suchraumtyp nicht zu überwachen;
das eine oder die mehreren Bits in den über den ersten PDCCH (physikalischer Downlink-Steuerkanal) mit einem UE-spezifischen Suchraum, UE SS, übertragenen DCI (Downlink-Steuerinformationen) werden verwendet, um dem UE (Benutzergerät) (11, 400) anzuzeigen, innerhalb der nachfolgenden N Slots den fünften PDCCH (physikalischer Downlink-Steuerkanal) mit dem UE-SS-Typ nicht zu überwachen; und
das eine oder die mehreren Bits in den über den ersten PDCCH (physikalischer Downlink-Steuerkanal) mit dem ersten Suchraumtyp übertragenen DCI (Downlink-Steuerinformationen) werden verwendet, um dem UE (Benutzergerät) (11, 400) anzuzeigen, innerhalb der nachfolgenden N Slots den fünften PDCCH (physikalischer Downlink-Steuerkanal) mit dem zweiten Suchraumtyp nicht zu überwachen.

9. Ein PDCCH-Konfigurationsverfahren für eine netzseitige Vorrichtung (10, 500), umfassend:
Konfigurieren (301) eines oder mehrerer Bits in DCI (Downlink-Steuerinformationen), die über einen ersten PDCCH (physikalischer Downlink-Steuerkanal) übertragen werden, wobei das eine oder die mehreren Bits in den DCI (Downlink-Steuerinformationen) des ersten PDCCH (physikalischer Downlink-Steuerkanal) einen von einem UE (Benutzergerät) (11, 400) nicht zu überwachenden PDCCH (physikalischer Downlink-Steuerkanal) und/oder einen von dem UE (Benutzergerät) (11, 400) zu überwachenden PDCCH (physikalischer Downlink-Steuerkanal) anzeigen,
das PDCCH-Konfigurationsverfahren ist **dadurch gekennzeichnet, dass** das eine oder die mehreren Bits in den über den ersten PDCCH (physikalischer Downlink-Steuerkanal) übertragenen DCI (Downlink-Steuerinformationen) verwendet werden, um den nicht zu überwachenden PDCCH (physikalischer Downlink-Steuerkanal) in mindestens einem der folgenden Fälle anzuzeigen:
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb nachfolgender N Slots einen zweiten PDCCH (physikalischer Downlink-Steuerkanal) mit demselben DCI-Format wie der erste PDCCH (physikalischer Downlink-Steuerkanal) oder mit einem spezifischen DCI-Format nicht zu überwachen;
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb nachfolgender N Slots einen dritten PDCCH (physikalischer Downlink-Steuerkanal) mit derselben temporären Funknetzkennung, RNTI, wie der erste PDCCH (physikalischer Downlink-Steuerkanal) oder mit einer spezifischen RNTI (temporäre Funknetzkennung) nicht zu überwachen;
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb nachfolgender N Slots einen vierten PDCCH (physikalischer Downlink-Steuerkanal) mit demselben Suchraum, SS, wie der erste PDCCH (physikalischer Downlink-Steuerkanal) oder mit einem spezifischen SS (Suchraum) nicht zu überwachen;
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb nachfolgender N Slots einen fünften PDCCH (physikalischer Downlink-Steuerkanal) mit demselben Suchraumtyp wie der erste PDCCH (physikalischer Downlink-Steuerkanal) oder mit einem spezifischen Suchraumtyp nicht zu überwachen; und
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb nachfolgender N Slots einen sechsten PDCCH (physikalischer Downlink-Steuerkanal) mit demselben Steuerressourcensatz, CORESET, wie der erste PDCCH (physikalischer Downlink-Steuerkanal) oder mit einem spezifischen CORESET (Steuerressourcensatz) nicht zu überwachen,
wobei N eine ganze Zahl größer als oder gleich 1 ist;
wobei das eine oder die mehreren Bits in den über den ersten PDCCH (physikalischer Downlink-Steuerkanal) übertragenen DCI (Downlink-Steuerinformationen) verwendet werden, um den zu überwachenden PDCCH (physikalischer Downlink-Steuerkanal) in mindestens einem der folgenden Fälle anzuzeigen:
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb eines ersten Slots nach den nachfolgenden N Slots einen siebten PDCCH (physikalischer Downlink-Steuerkanal) mit demselben DCI-Format wie der erste PDCCH (physikalischer Downlink-Steuerkanal) oder mit einem spezifischen DCI-Format zu überwachen;
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb des ersten Slots nach den nachfolgenden N Slots einen achten PDCCH (physikalischer Downlink-Steuerkanal) mit derselben temporären Funknetzkennung, RNTI, wie der erste PDCCH (physikalischer Downlink-Steuerkanal) oder mit einer spezifischen RNTI (temporäre Funknetzkennung) zu überwachen;
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb des ersten Slots nach den nachfolgenden N Slots einen neunten PDCCH (physikalischer Downlink-Steuerkanal) mit demselben SS (Suchraum) wie der erste PDCCH (physikalischer Downlink-Steuerkanal) oder mit einem spezifischen SS (Suchraum) zu überwachen;
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb des ersten Slots nach den nachfolgenden N Slots einen zehnten PDCCH (physikalischer Downlink-Steuerkanal) mit demselben SS-Typ (Suchraum) wie der erste PDCCH (physikalischer Downlink-Steuerkanal) oder mit einem spezifischen Suchraumtyp zu überwachen; und
die ein oder mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb des ersten Slots nach den nachfolgenden N Slots einen elften PDCCH zu überwachen, der denselben Steuerressourcensatz, CORESET, wie der erste PDCCH oder einen spezifischen CORESET aufweist,
wobei N eine ganze Zahl größer als oder gleich 1 ist.

10. Ein Benutzergerät, UE (11, 400), umfassend:
ein Erfassungsmodul (401), das konfiguriert ist, ein oder mehrere Bits in DCI zu erfassen, die über einen ersten PDCCH übertragen werden, der von dem UE (11, 400) überwacht wird, wobei die ein oder mehreren Bits in den DCI des ersten PDCCH einen nicht zu überwachenden PDCCH und/oder einen zu überwachenden PDCCH anzeigen; und
ein Bestimmungsmodul (402), das konfiguriert ist, den nicht zu überwachenden PDCCH und/oder den zu überwachenden PDCCH gemäß den ein oder mehreren Bits in den DCI des ersten PDCCH zu bestimmen,
das UE (11, 400) ist **dadurch gekennzeichnet, dass**
die ein oder mehreren Bits in den über den ersten PDCCH übertragenen DCI verwendet werden, um den nicht zu überwachenden PDCCH in mindestens einem der folgenden Fälle anzuzeigen:
die ein oder mehreren Bits in den über den ersten PDCCH übertragenen DCI werden verwendet, um dem UE (11, 400) anzuzeigen, innerhalb der nachfolgenden N Slots einen zweiten PDCCH mit demselben DCI-Format wie der erste PDCCH oder mit einem spezifischen DCI-Format nicht zu überwachen;
die ein oder mehreren Bits in den über den ersten PDCCH übertragenen DCI werden verwendet, um dem UE (11, 400) anzuzeigen, innerhalb der nachfolgenden N Slots einen dritten PDCCH nicht zu überwachen, der dieselbe temporäre Funknetzkennung, RNTI, wie der erste PDCCH oder eine spezifische RNTI aufweist;
die ein oder mehreren Bits in den über den ersten PDCCH übertragenen DCI werden verwendet, um dem UE (11, 400) anzuzeigen, innerhalb der nachfolgenden N Slots einen vierten PDCCH nicht zu überwachen, der denselben Suchraum, SS, wie der erste PDCCH oder einen spezifischen SS aufweist;
die ein oder mehreren Bits in den über den ersten PDCCH übertragenen DCI werden verwendet, um dem UE (11, 400) anzuzeigen, innerhalb der nachfolgenden N Slots einen fünften PDCCH mit demselben Suchraumtyp wie der erste PDCCH oder mit einem spezifischen Suchraumtyp nicht zu überwachen; und
die ein oder mehreren Bits in den über den ersten PDCCH übertragenen DCI werden verwendet, um dem UE (11, 400) anzuzeigen, innerhalb der nachfolgenden N Slots einen sechsten PDCCH nicht zu überwachen, der denselben Steuerressourcensatz, CORESET, wie der erste PDCCH oder einen spezifischen CORESET aufweist,
wobei N eine ganze Zahl größer als oder gleich 1 ist;
wobei die ein oder mehreren Bits in den über den ersten PDCCH übertragenen DCI verwendet werden, um den zu überwachenden PDCCH in mindestens einem der folgenden Fälle anzuzeigen:
die ein oder mehreren Bits in den über den ersten PDCCH übertragenen DCI werden verwendet, um dem UE (11, 400) anzuzeigen, innerhalb eines ersten Slots nach den nachfolgenden N Slots einen siebten PDCCH mit demselben DCI-Format wie der erste PDCCH oder mit einem spezifischen DCI-Format zu überwachen;
die ein oder mehreren Bits in den über den ersten PDCCH übertragenen DCI werden verwendet, um dem UE (11, 400) anzuzeigen, innerhalb des ersten Slots nach den nachfolgenden N Slots einen achten PDCCH zu überwachen, der dieselbe temporäre Funknetzkennung, RNTI, wie der erste PDCCH oder eine spezifische RNTI aufweist;
die ein oder mehreren Bits in den über den ersten PDCCH übertragenen DCI werden verwendet, um dem UE (11, 400) anzuzeigen, innerhalb des ersten Slots nach den nachfolgenden N Slots einen neunten PDCCH zu überwachen, der denselben Suchraum, SS, wie der erste PDCCH oder einen spezifischen SS aufweist;
die ein oder mehreren Bits in den über den ersten PDCCH übertragenen DCI werden verwendet, um dem UE (11, 400) anzuzeigen, innerhalb des ersten Slots nach den nachfolgenden N Slots einen zehnten PDCCH mit demselben Suchraumtyp wie der erste PDCCH oder mit einem spezifischen Suchraumtyp zu überwachen; und
die ein oder mehreren Bits in den über den ersten PDCCH übertragenen DCI werden verwendet, um dem UE (11, 400) anzuzeigen, innerhalb des ersten Slots nach den nachfolgenden N Slots einen elften PDCCH zu überwachen, der denselben Steuerressourcensatz, CORESET, wie der erste PDCCH oder einen spezifischen CORESET aufweist,
wobei N eine ganze Zahl größer als oder gleich 1 ist.

11. Das UE (11, 400) nach Anspruch 10, wobei das UE (11, 400) ferner konfiguriert ist zum:
Empfangen von Anzeigeinformationen von einer netzseitigen Vorrichtung (10, 500), wobei die Anzeigeinformationen verwendet werden, um dem UE (11, 400) anzuzeigen, den ersten PDCCH zu überwachen, oder anzuzeigen, dass der erste PDCCH von der netzseitigen Vorrichtung (10, 500) für das UE (11, 400) konfiguriert wurde, oder die Anzeigeinformationen verwendet werden, um dem UE (11, 400) anzuzeigen, den ersten PDCCH nicht zu überwachen, oder anzuzeigen, dass der erste PDCCH von der netzseitigen Vorrichtung (10, 500) für das UE (11, 400) nicht konfiguriert wurde.

12. Das UE (11, 400) nach Anspruch 10, wobei die ein oder mehreren Bits in den über den ersten PDCCH übertragenen DCI verwendet werden, um dem UE (11, 400) in mindestens einem der folgenden Fälle anzuzeigen, innerhalb der nachfolgenden N Slots den zweiten PDCCH mit demselben DCI-Format wie der erste PDCCH oder mit dem spezifischen DCI-Format nicht zu überwachen:
die ein oder mehreren Bits in den DCI in einem ersten DCI-Format oder einem zweiten DCI-Format, die über den ersten PDCCH übertragen werden, werden verwendet, um dem UE (11, 400) anzuzeigen, innerhalb der nachfolgenden N Slots den zweiten PDCCH mit dem ersten DCI-Format oder dem zweiten DCI-Format nicht zu überwachen;
die ein oder mehreren Bits in den DCI in dem ersten DCI-Format oder einem dritten DCI-Format, die über den ersten PDCCH übertragen werden, werden verwendet, um dem UE (11, 400) anzuzeigen, innerhalb der nachfolgenden N Slots den zweiten PDCCH mit dem ersten DCI-Format oder dem dritten DCI-Format nicht zu überwachen;
die ein oder mehreren Bits in den DCI in dem zweiten DCI-Format oder einem vierten DCI-Format, die über den ersten PDCCH übertragen werden, werden verwendet, um dem UE (11, 400) anzuzeigen, innerhalb der nachfolgenden N Slots den zweiten PDCCH mit dem zweiten DCI-Format oder dem vierten DCI-Format nicht zu überwachen;
die ein oder mehreren Bits in den DCI in dem zweiten DCI-Format oder dem vierten DCI-Format, die über den ersten PDCCH übertragen werden, werden verwendet, um dem UE (11, 400) anzuzeigen, innerhalb der nachfolgenden N Slots den zweiten PDCCH mit dem ersten DCI-Format oder dem dritten DCI-Format nicht zu überwachen;
die ein oder mehreren Bits in den DCI in dem ersten DCI-Format oder dem dritten DCI-Format, die über den ersten PDCCH übertragen werden, werden verwendet, um dem UE (11, 400) anzuzeigen, innerhalb der nachfolgenden N Slots den zweiten PDCCH mit dem zweiten DCI-Format oder dem vierten DCI-Format nicht zu überwachen;
die ein oder mehreren Bits in den DCI in dem ersten DCI-Format, dem zweiten DCI-Format, dem dritten DCI-Format oder dem vierten DCI-Format, die über den ersten PDCCH übertragen werden, werden verwendet, um dem UE (11, 400) anzuzeigen, innerhalb der nachfolgenden N Slots den zweiten PDCCH mit dem ersten DCI-Format, dem zweiten DCI-Format, dem dritten DCI-Format oder dem vierten DCI-Format nicht zu überwachen; und
die ein oder mehreren Bits in den DCI in einem fünften DCI-Format, die über den ersten PDCCH übertragen werden, werden verwendet, um dem UE (11, 400) anzuzeigen, innerhalb der nachfolgenden N Slots den zweiten PDCCH mit dem fünften DCI-Format nicht zu überwachen,
wobei das erste DCI-Format verwendet wird, um physikalische gemeinsam genutzte Uplink-Kanäle für eine Zelle einzuplanen, das zweite DCI-Format verwendet wird, um physikalische gemeinsam genutzte Downlink-Kanäle für eine Zelle einzuplanen, das dritte DCI-Format verwendet wird, um physikalische gemeinsam genutzte Uplink-Kanäle für eine Zelle einzuplanen, das vierte DCI-Format verwendet wird, um physikalische gemeinsam genutzte Downlink-Kanäle für eine Zelle einzuplanen, und das fünfte DCI-Format verwendet wird, um eine Gruppe von Slot-Formaten des UE (11, 400) mitzuteilen.

13. Das UE (11, 400) nach Anspruch 10, wobei die ein oder mehreren Bits in den über den ersten PDCCH übertragenen DCI verwendet werden, um dem UE (11, 400) in mindestens einem der folgenden Fälle anzuzeigen, innerhalb des ersten Slots nach den nachfolgenden N Slots den siebten PDCCH mit demselben DCI-Format wie der erste PDCCH oder mit dem spezifischen DCI-Format zu überwachen:
das eine oder die mehreren Bits in den DCI (Downlink-Steuerinformationen) in einem ersten DCI-Format oder einem zweiten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH mit dem ersten DCI-Format oder dem zweiten DCI-Format zu überwachen;
das eine oder die mehreren Bits in den DCI (Downlink-Steuerinformationen) im ersten DCI-Format oder in einem dritten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH mit dem ersten DCI-Format oder dem dritten DCI-Format zu überwachen;
das eine oder die mehreren Bits in den DCI (Downlink-Steuerinformationen) im zweiten DCI-Format oder in einem vierten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH mit dem zweiten DCI-Format oder dem vierten DCI-Format zu überwachen;
das eine oder die mehreren Bits in den DCI (Downlink-Steuerinformationen) im zweiten DCI-Format oder im vierten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH mit dem ersten DCI-Format oder dem dritten DCI-Format zu überwachen;
das eine oder die mehreren Bits in den DCI (Downlink-Steuerinformationen) im ersten DCI-Format oder im dritten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den zweiten PDCCH mit dem zweiten DCI-Format oder dem vierten DCI-Format zu überwachen;
das eine oder die mehreren Bits in den DCI (Downlink-Steuerinformationen) im ersten DCI-Format, im zweiten DCI-Format, im dritten DCI-Format oder im vierten DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH mit dem ersten DCI-Format, dem zweiten DCI-Format, dem dritten DCI-Format oder dem vierten DCI-Format zu überwachen; und
das eine oder die mehreren Bits in den DCI (Downlink-Steuerinformationen) in einem fünften DCI-Format, die über den ersten PDCCH (physikalischer Downlink-Steuerkanal) übertragen werden, werden verwendet, um dem UE (Benutzergerät) (11, 400) anzuzeigen, innerhalb des ersten Slots nach den nachfolgenden N Slots den siebten PDCCH mit dem fünften DCI-Format zu überwachen,
wobei das erste DCI-Format (Format für Downlink-Steuerinformationen) verwendet wird, um physikalische gemeinsam genutzte Uplink-Kanäle für eine Zelle einzuplanen, das zweite DCI-Format verwendet wird, um physikalische gemeinsam genutzte Downlink-Kanäle für eine Zelle einzuplanen, das dritte DCI-Format verwendet wird, um physikalische gemeinsam genutzte Uplink-Kanäle für eine Zelle einzuplanen, das vierte DCI-Format verwendet wird, um physikalische gemeinsam genutzte Downlink-Kanäle für eine Zelle einzuplanen, und das fünfte DCI-Format verwendet wird, um eine Gruppe von Slotformaten des UE (Benutzergerät) (11, 400) mitzuteilen.

14. Das UE (Benutzergerät) (11, 400) nach Anspruch 10, wobei das eine oder die mehreren Bits in den über den ersten PDCCH (physikalischer Downlink-Steuerkanal) übertragenen DCI (Downlink-Steuerinformationen) verwendet werden, um dem UE (11, 400) anzuzeigen, innerhalb der nachfolgenden N Slots den fünften PDCCH mit demselben Suchraumtyp wie der erste PDCCH oder mit dem spezifischen Suchraumtyp in mindestens einem der folgenden Fälle nicht zu überwachen:
das eine oder die mehreren Bits in den über den ersten PDCCH (physikalischer Downlink-Steuerkanal) mit einem ersten gemeinsamen SS-Typ (Suchraumtyp) übertragenen DCI (Downlink-Steuerinformationen) werden verwendet, um dem UE (Benutzergerät) (11, 400) anzuzeigen, innerhalb der nachfolgenden N Slots den fünften PDCCH mit dem ersten gemeinsamen SS-Typ nicht zu überwachen;
das eine oder die mehreren Bits in den über den ersten PDCCH (physikalischer Downlink-Steuerkanal) mit einem zweiten gemeinsamen SS-Typ (Suchraumtyp) übertragenen DCI (Downlink-Steuerinformationen) werden verwendet, um dem UE (Benutzergerät) (11, 400) anzuzeigen, innerhalb der nachfolgenden N Slots den fünften PDCCH mit dem zweiten gemeinsamen SS-Typ nicht zu überwachen;
das eine oder die mehreren Bits in den über den ersten PDCCH (physikalischer Downlink-Steuerkanal) mit einem dritten gemeinsamen SS-Typ (Suchraumtyp) übertragenen DCI (Downlink-Steuerinformationen) werden verwendet, um dem UE (Benutzergerät) (11, 400) anzuzeigen, innerhalb der nachfolgenden N Slots den fünften PDCCH mit dem dritten gemeinsamen SS-Typ nicht zu überwachen;
das eine oder die mehreren Bits in den über den ersten PDCCH (physikalischer Downlink-Steuerkanal) mit einem vierten gemeinsamen SS-Typ (Suchraumtyp) übertragenen DCI (Downlink-Steuerinformationen) werden verwendet, um dem UE (Benutzergerät) (11, 400) anzuzeigen, innerhalb der nachfolgenden N Slots den fünften PDCCH mit dem vierten gemeinsamen SS-Typ nicht zu überwachen;
das eine oder die mehreren Bits in den über den ersten PDCCH (physikalischer Downlink-Steuerkanal) mit einem UE-spezifischen Suchraum, UE SS, übertragenen DCI (Downlink-Steuerinformationen) werden verwendet, um dem UE (Benutzergerät) (11, 400) anzuzeigen, innerhalb der nachfolgenden N Slots den fünften PDCCH mit dem UE-SS-Typ nicht zu überwachen; und das eine oder die mehreren Bits in den über den ersten PDCCH mit dem ersten SS-Typ übertragenen DCI werden verwendet, um dem UE (11, 400) anzuzeigen, innerhalb der nachfolgenden N Slots den fünften PDCCH mit dem zweiten SS-Typ nicht zu überwachen.

15. Eine netzseitige Vorrichtung (10, 500), umfassend:
ein Konfigurationsmodul (501), das dazu konfiguriert ist, ein oder mehrere Bits in über einen ersten PDCCH (physikalischer Downlink-Steuerkanal) übertragenen DCI (Downlink-Steuerinformationen) zu konfigurieren, wobei das eine oder die mehreren Bits in den DCI des ersten PDCCH einen von einem UE (Benutzergerät) (11, 400) nicht zu überwachenden PDCCH und/oder einen von dem UE (11, 400) zu überwachenden PDCCH anzeigen,
die netzseitige Vorrichtung (10, 500) ist **gekennzeichnet durch**
wobei das eine oder die mehreren Bits in den über den ersten PDCCH (physikalischer Downlink-Steuerkanal) übertragenen DCI (Downlink-Steuerinformationen) verwendet werden, um den nicht zu überwachenden PDCCH in mindestens einem der folgenden Fälle anzuzeigen:
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb nachfolgender N Slots einen zweiten PDCCH mit demselben DCI-Format wie der erste PDCCH oder mit einem spezifischen DCI-Format nicht zu überwachen;
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb nachfolgender N Slots einen dritten PDCCH mit derselben temporären Funknetzkennung, RNTI, wie der erste PDCCH oder mit einer spezifischen RNTI nicht zu überwachen;
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb nachfolgender N Slots einen vierten PDCCH mit demselben Suchraum, SS, wie der erste PDCCH oder mit einem spezifischen SS nicht zu überwachen;
das eine oder die mehreren Bits in den über den ersten PDCCH übertragenen DCI werden verwendet, um dem UE (11, 400) anzuzeigen, innerhalb nachfolgender N Slots einen fünften PDCCH mit demselben SS-Typ wie der erste PDCCH oder mit einem spezifischen SS-Typ nicht zu überwachen; und
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb nachfolgender N Slots einen sechsten PDCCH mit demselben Steuerressourcensatz, CORESET, wie der erste PDCCH oder mit einem spezifischen CORESET nicht zu überwachen,
wobei N eine ganze Zahl größer als oder gleich 1 ist;
wobei das eine oder die mehreren Bits in den über den ersten PDCCH (physikalischer Downlink-Steuerkanal) übertragenen DCI (Downlink-Steuerinformationen) verwendet werden, um den zu überwachenden PDCCH in mindestens einem der folgenden Fälle anzuzeigen:
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb eines ersten Slots nach den nachfolgenden N Slots einen siebten PDCCH mit demselben DCI-Format wie der erste PDCCH oder mit einem spezifischen DCI-Format zu überwachen;
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb des ersten Slots nach den nachfolgenden N Slots einen achten PDCCH mit derselben temporären Funknetzkennung, RNTI, wie der erste PDCCH oder mit einer spezifischen RNTI zu überwachen;
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb des ersten Slots nach den nachfolgenden N Slots einen neunten PDCCH mit demselben Suchraum, SS, wie der erste PDCCH oder mit einem spezifischen SS zu überwachen;
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb des ersten Slots nach den nachfolgenden N Slots einen zehnten PDCCH mit demselben SS-Typ (Suchraumtyp) wie der erste PDCCH oder mit einem spezifischen SS-Typ zu überwachen; und
das eine oder die mehreren Bits in den über den ersten PDCCH (physikalischer Downlink-Steuerkanal) übertragenen DCI (Downlink-Steuerinformationen) werden verwendet, um dem UE (Benutzergerät) (11, 400) anzuzeigen, innerhalb des ersten Slots nach den nachfolgenden N Slots einen elften PDCCH mit demselben Steuerressourcensatz, CORESET, wie der erste PDCCH oder mit einem spezifischen CORESET zu überwachen,
wobei N eine ganze Zahl größer als oder gleich 1 ist.

## Revendications

1. Un procédé de surveillance de canal physique de commande de liaison descendante, PDCCH, pour un équipement utilisateur, UE (11, 400), comprenant :
l'acquisition (201) d'un ou plusieurs bits dans une information de commande de liaison descendante, DCI, transmise via un premier PDCCH surveillé par l'UE (11, 400), le ou les bits dans la DCI du premier PDCCH indiquant un PDCCH à ne pas surveiller et/ou un PDCCH à surveiller ; et
la détermination (202) du PDCCH à ne pas surveiller et/ou du PDCCH à surveiller conformément au ou aux bits dans la DCI du premier PDCCH,
le procédé de surveillance de PDCCH est **caractérisé en ce que**
le ou les bits dans la DCI transmise via le premier PDCCH sont utilisés pour indiquer le PDCCH à ne pas surveiller selon au moins l'un des éléments suivants :
le ou les bits dans la DCI transmise via le premier PDCCH sont utilisés pour indiquer à l'UE (11, 400) de ne pas surveiller, dans les N créneaux suivants, un deuxième PDCCH ayant un même format de DCI que le premier PDCCH ou ayant un format de DCI spécifique ;
le ou les bits dans la DCI transmise via le premier PDCCH sont utilisés pour indiquer à l'UE (11, 400) de ne pas surveiller, dans les N créneaux suivants, un troisième PDCCH ayant une même identité temporaire de réseau radio, RNTI, que le premier PDCCH ou ayant une RNTI spécifique ;
le ou les bits dans la DCI transmise via le premier PDCCH sont utilisés pour indiquer à l'UE (11, 400) de ne pas surveiller, dans les N créneaux suivants, un quatrième PDCCH ayant un même espace de recherche, SS, que le premier PDCCH ou ayant un SS spécifique ;
le ou les bits dans la DCI transmise via le premier PDCCH sont utilisés pour indiquer à l'UE (11, 400) de ne pas surveiller, dans les N créneaux suivants, un cinquième PDCCH ayant un même type d'espace de recherche que le premier PDCCH ou ayant un type d'espace de recherche spécifique ; et
le ou les bits dans la DCI transmise via le premier PDCCH sont utilisés pour indiquer à l'UE (11, 400) de ne pas surveiller, dans les N créneaux suivants, un sixième PDCCH ayant un même ensemble de ressources de commande, CORESET, que le premier PDCCH ou ayant un CORESET spécifique,
dans lequel N est un entier supérieur ou égal à 1 ;
dans lequel le ou les bits dans la DCI transmise via le premier PDCCH sont utilisés pour indiquer le PDCCH à surveiller selon au moins l'un des éléments suivants :
le ou les bits dans la DCI transmise via le premier PDCCH sont utilisés pour indiquer à l'UE (11, 400) de surveiller, dans un premier créneau suivant les N créneaux suivants, un septième PDCCH ayant un même format de DCI que le premier PDCCH ou ayant un format de DCI spécifique ;
le ou les bits dans la DCI transmise via le premier PDCCH sont utilisés pour indiquer à l'UE (11, 400) de surveiller, dans le premier créneau suivant les N créneaux suivants, un huitième PDCCH ayant une même identité temporaire de réseau radio, RNTI, que le premier PDCCH ou ayant une RNTI spécifique ;
le ou les bits dans la DCI transmise via le premier PDCCH sont utilisés pour indiquer à l'UE (11, 400) de surveiller, dans le premier créneau suivant les N créneaux suivants, un neuvième PDCCH ayant un même espace de recherche, SS, que le premier PDCCH ou ayant un SS spécifique ;
le ou les bits dans la DCI transmise via le premier PDCCH sont utilisés pour indiquer à l'UE (11, 400) de surveiller, dans le premier créneau suivant les N créneaux suivants, un dixième PDCCH ayant un même type d'espace de recherche que le premier PDCCH ou ayant un type d'espace de recherche spécifique ; et
le ou les bits dans la DCI transmise via le premier PDCCH sont utilisés pour indiquer à l'UE (11, 400) de surveiller, dans le premier créneau suivant les N créneaux suivants, un onzième PDCCH ayant un même ensemble de ressources de commande, CORESET, que le premier PDCCH ou ayant un CORESET spécifique,
dans lequel N est un entier supérieur ou égal à 1.

2. Le procédé de surveillance de PDCCH selon la revendication 1, comprenant en outre :
la réception d'informations d'indication provenant d'un dispositif côté réseau (10, 500), dans lequel les informations d'indication sont utilisées pour indiquer à l'UE (11, 400) de surveiller le premier PDCCH ou indiquer que le premier PDCCH a été configuré par le dispositif côté réseau (10, 500) pour l'UE (11, 400), ou les informations d'indication sont utilisées pour indiquer à l'UE (11, 400) de ne pas surveiller le premier PDCCH ou indiquer que le premier PDCCH n'a pas été configuré par le dispositif côté réseau (10, 500) pour l'UE (11, 400).

3. Le procédé de surveillance de PDCCH selon la revendication 1, dans lequel le ou les bits dans la DCI transmise via le premier PDCCH sont utilisés pour indiquer à l'UE (11, 400) de ne pas surveiller, dans les N créneaux suivants, le deuxième PDCCH ayant le même format de DCI que le premier PDCCH ou ayant le format de DCI spécifique selon au moins l'un des éléments suivants :
le ou les bits dans la DCI dans un premier format de DCI ou un deuxième format de DCI transmise via le premier PDCCH sont utilisés pour indiquer à l'UE (11, 400) de ne pas surveiller, dans les N créneaux suivants, le deuxième PDCCH ayant le premier format de DCI ou le deuxième format de DCI ;
le ou les bits dans la DCI dans le premier format de DCI ou un troisième format de DCI transmise via le premier PDCCH sont utilisés pour indiquer à l'UE (11, 400) de ne pas surveiller, dans les N créneaux suivants, le deuxième PDCCH ayant le premier format de DCI ou le troisième format de DCI ;
le ou les bits dans la DCI dans le deuxième format de DCI ou un quatrième format de DCI transmise via le premier PDCCH sont utilisés pour indiquer à l'UE (11, 400) de ne pas surveiller, dans les N créneaux suivants, le deuxième PDCCH ayant le deuxième format de DCI ou le quatrième format de DCI ;
le ou les bits dans la DCI dans le deuxième format de DCI ou le quatrième format de DCI transmise via le premier PDCCH sont utilisés pour indiquer à l'UE (11, 400) de ne pas surveiller, dans les N créneaux suivants, le deuxième PDCCH ayant le premier format de DCI ou le troisième format de DCI ;
le ou les bits dans la DCI dans le premier format de DCI ou le troisième format de DCI transmise via le premier PDCCH sont utilisés pour indiquer à l'UE (11, 400) de ne pas surveiller, dans les N créneaux suivants, le deuxième PDCCH ayant le deuxième format de DCI ou le quatrième format de DCI ;
le ou les bits dans la DCI dans le premier format de DCI, le deuxième format de DCI, le troisième format de DCI ou le quatrième format de DCI transmise via le premier PDCCH sont utilisés pour indiquer à l'UE (11, 400) de ne pas surveiller, dans les N créneaux suivants, le deuxième PDCCH ayant le premier format de DCI, le deuxième format de DCI, le troisième format de DCI ou le quatrième format de DCI ; et
le ou les bits dans la DCI dans un cinquième format de DCI transmise via le premier PDCCH sont utilisés pour indiquer à l'UE (11, 400) de ne pas surveiller, dans les N créneaux suivants, le deuxième PDCCH ayant le cinquième format de DCI,
dans lequel le premier format de DCI est utilisé pour ordonnancer des canaux physiques partagés de liaison montante pour une cellule, le deuxième format de DCI est utilisé pour ordonnancer des canaux physiques partagés de liaison descendante pour une cellule, le troisième format de DCI est utilisé pour ordonnancer des canaux physiques partagés de liaison montante pour une cellule, le quatrième format de DCI est utilisé pour ordonnancer des canaux physiques partagés de liaison descendante pour une cellule, et le cinquième format de DCI est utilisé pour notifier un groupe de formats de créneaux de l'UE (11, 400).

4. Le procédé de surveillance de PDCCH selon la revendication 1, dans lequel les N créneaux suivants comprennent les N créneaux suivants qui satisfont à une périodicité de surveillance et à une valeur de décalage configurées par le dispositif côté réseau (10, 500), ou les N créneaux de liaison descendante suivants qui satisfont à la périodicité de surveillance et à la valeur de décalage configurées par le dispositif côté réseau (10, 500).

5. Le procédé de surveillance de PDCCH selon la revendication 1, dans lequel le ou les bits dans la DCI transmise via le premier PDCCH sont utilisés pour indiquer à l'UE (11, 400) de surveiller, dans le premier créneau suivant les N créneaux suivants, le septième PDCCH ayant le même format de DCI que le premier PDCCH ou ayant le format de DCI spécifique selon au moins l'un des éléments suivants :
un ou plusieurs bits de la DCI dans un premier format de DCI ou un deuxième format de DCI transmise via le premier PDCCH sont utilisés pour indiquer à l'UE (11, 400) de surveiller, dans le premier créneau suivant les N créneaux suivants, le septième PDCCH ayant le premier format de DCI ou le deuxième format de DCI ;
un ou plusieurs bits de la DCI dans le premier format de DCI ou un troisième format de DCI transmise via le premier PDCCH sont utilisés pour indiquer à l'UE (11, 400) de surveiller, dans le premier créneau suivant les N créneaux suivants, le septième PDCCH ayant le premier format de DCI ou le troisième format de DCI ;
un ou plusieurs bits de la DCI dans le deuxième format de DCI ou un quatrième format de DCI transmise via le premier PDCCH sont utilisés pour indiquer à l'UE (11, 400) de surveiller, dans le premier créneau suivant les N créneaux suivants, le septième PDCCH ayant le deuxième format de DCI ou le quatrième format de DCI ;
un ou plusieurs bits de la DCI dans le deuxième format de DCI ou le quatrième format de DCI transmise via le premier PDCCH sont utilisés pour indiquer à l'UE (11, 400) de surveiller, dans le premier créneau suivant les N créneaux suivants, le septième PDCCH ayant le premier format de DCI ou le troisième format de DCI ;
un ou plusieurs bits de la DCI dans le premier format de DCI ou le troisième format de DCI transmise via le premier PDCCH sont utilisés pour indiquer à l'UE (11, 400) de surveiller, dans le premier créneau suivant les N créneaux suivants, le deuxième PDCCH ayant le deuxième format de DCI ou le quatrième format de DCI ;
un ou plusieurs bits de la DCI dans le premier format de DCI, le deuxième format de DCI, le troisième format de DCI ou le quatrième format de DCI transmise via le premier PDCCH sont utilisés pour indiquer à l'UE (11, 400) de surveiller, dans le premier créneau suivant les N créneaux suivants, le septième PDCCH ayant le premier format de DCI, le deuxième format de DCI, le troisième format de DCI ou le quatrième format de DCI ; et
un ou plusieurs bits de la DCI dans un cinquième format de DCI transmise via le premier PDCCH sont utilisés pour indiquer à l'UE (11, 400) de surveiller, dans le premier créneau suivant les N créneaux suivants, le septième PDCCH ayant le cinquième format de DCI,
dans lequel le premier format de DCI est utilisé pour ordonnancer des canaux physiques partagés de liaison montante pour une cellule, le deuxième format de DCI est utilisé pour ordonnancer des canaux physiques partagés de liaison descendante pour une cellule, le troisième format de DCI est utilisé pour ordonnancer des canaux physiques partagés de liaison montante pour une cellule, le quatrième format de DCI est utilisé pour ordonnancer des canaux physiques partagés de liaison descendante pour une cellule, et le cinquième format de DCI est utilisé pour notifier un groupe de formats de créneaux de l'UE (11,400).

6. Le procédé de surveillance de PDCCH selon la revendication 1, dans lequel le premier créneau suivant les N créneaux suivants est un premier créneau qui satisfait à la périodicité de surveillance et à la valeur de décalage configurées par le dispositif côté réseau (10, 500) suivant les N créneaux suivants qui satisfont à la périodicité de surveillance et à la valeur de décalage configurées par le dispositif côté réseau (10, 500), ou un premier créneau de liaison descendante qui satisfait à la périodicité de surveillance et à la valeur de décalage configurées par le dispositif côté réseau (10, 500) suivant les N créneaux suivants qui satisfont à la périodicité de surveillance et à la valeur de décalage configurées par le dispositif côté réseau (10, 500).

7. Le procédé de surveillance de PDCCH selon la revendication 1, dans lequel, lorsque les un ou plusieurs bits de la DCI transmise via le premier PDCCH indiquent le PDCCH à surveiller, les un ou plusieurs bits de la DCI transmise via le premier PDCCH sont utilisés pour indiquer un comportement de surveillance par défaut de l'UE (11, 400) pour surveiller le PDCCH,
dans lequel le comportement de surveillance par défaut comprend au moins la surveillance, par l'UE (11, 400), du PDCCH dans un prochain créneau ou créneau de liaison descendante qui satisfait à la périodicité de surveillance et à la valeur de décalage configurées par le dispositif côté réseau (10, 500).

8. Le procédé de surveillance de PDCCH selon la revendication 1, dans lequel un ou plusieurs bits de la DCI transmise via le premier PDCCH sont utilisés pour indiquer à l'UE (11, 400) de ne pas surveiller, dans les N créneaux suivants, le cinquième PDCCH ayant le même type d'espace de recherche que le premier PDCCH ou ayant le type d'espace de recherche spécifique dans au moins l'un des cas suivants :
un ou plusieurs bits de la DCI transmise via le premier PDCCH ayant un premier type d'espace de recherche commun sont utilisés pour indiquer à l'UE (11, 400) de ne pas surveiller, dans les N créneaux suivants, le cinquième PDCCH ayant le premier type d'espace de recherche commun ;
un ou plusieurs bits de la DCI transmise via le premier PDCCH ayant un deuxième type d'espace de recherche commun sont utilisés pour indiquer à l'UE (11, 400) de ne pas surveiller, dans les N créneaux suivants, le cinquième PDCCH ayant le deuxième type d'espace de recherche commun ;
un ou plusieurs bits de la DCI transmise via le premier PDCCH ayant un troisième type d'espace de recherche commun sont utilisés pour indiquer à l'UE (11, 400) de ne pas surveiller, dans les N créneaux suivants, le cinquième PDCCH ayant le troisième type d'espace de recherche commun ;
un ou plusieurs bits de la DCI transmise via le premier PDCCH ayant un quatrième type d'espace de recherche commun sont utilisés pour indiquer à l'UE (11, 400) de ne pas surveiller, dans les N créneaux suivants, le cinquième PDCCH ayant le quatrième type d'espace de recherche commun ;
un ou plusieurs bits de la DCI transmise via le premier PDCCH ayant un espace de recherche spécifique à l'UE, UE SS, sont utilisés pour indiquer à l'UE (11, 400) de ne pas surveiller, dans les N créneaux suivants, le cinquième PDCCH ayant le type d'UE SS ; et
un ou plusieurs bits de la DCI transmise via le premier PDCCH ayant le premier type d'espace de recherche sont utilisés pour indiquer à l'UE (11, 400) de ne pas surveiller, dans les N créneaux suivants, le cinquième PDCCH ayant le deuxième type d'espace de recherche.

9. Un procédé de configuration de PDCCH pour un dispositif côté réseau (10, 500), comprenant :
la configuration (301) d'un ou plusieurs bits dans une DCI transmise via un premier PDCCH, les un ou plusieurs bits de la DCI du premier PDCCH indiquant un PDCCH à ne pas surveiller par un UE (11, 400) et/ou un PDCCH à surveiller par l'UE (11, 400),
le procédé de configuration de PDCCH est **caractérisé en ce que** les un ou plusieurs bits de la DCI transmise via le premier PDCCH sont utilisés pour indiquer le PDCCH à ne pas surveiller dans au moins l'un des cas suivants :
un ou plusieurs bits de la DCI transmise via le premier PDCCH sont utilisés pour indiquer à l'UE (11, 400) de ne pas surveiller, dans les N créneaux suivants, un deuxième PDCCH ayant un même format de DCI que le premier PDCCH ou ayant un format de DCI spécifique ;
un ou plusieurs bits de la DCI transmise via le premier PDCCH sont utilisés pour indiquer à l'UE (11, 400) de ne pas surveiller, dans les N créneaux suivants, un troisième PDCCH ayant une même identité temporaire de réseau radio, RNTI, que le premier PDCCH ou ayant une RNTI spécifique ;
un ou plusieurs bits de la DCI transmise via le premier PDCCH sont utilisés pour indiquer à l'UE (11, 400) de ne pas surveiller, dans les N créneaux suivants, un quatrième PDCCH ayant un même espace de recherche, SS, que le premier PDCCH ou ayant un SS spécifique ;
un ou plusieurs bits de la DCI transmise via le premier PDCCH sont utilisés pour indiquer à l'UE (11, 400) de ne pas surveiller, dans les N créneaux suivants, un cinquième PDCCH ayant un même type d'espace de recherche que le premier PDCCH ou ayant un type d'espace de recherche spécifique ; et
un ou plusieurs bits de la DCI transmise via le premier PDCCH sont utilisés pour indiquer à l'UE (11, 400) de ne pas surveiller, dans les N créneaux suivants, un sixième PDCCH ayant un même ensemble de ressources de commande, CORESET, que le premier PDCCH ou ayant un CORESET spécifique,
dans lequel N est un entier supérieur ou égal à 1 ;
dans lequel les un ou plusieurs bits de la DCI transmise via le premier PDCCH sont utilisés pour indiquer le PDCCH à surveiller dans au moins l'un des cas suivants :
un ou plusieurs bits de la DCI transmise via le premier PDCCH sont utilisés pour indiquer à l'UE (11, 400) de surveiller, dans un premier créneau suivant les N créneaux suivants, un septième PDCCH ayant un même format de DCI que le premier PDCCH ou ayant un format de DCI spécifique ;
un ou plusieurs bits de la DCI transmise via le premier PDCCH sont utilisés pour indiquer à l'UE (11, 400) de surveiller, dans le premier créneau suivant les N créneaux suivants, un huitième PDCCH ayant une même identité temporaire de réseau radio, RNTI, que le premier PDCCH ou ayant une RNTI spécifique ;
un ou plusieurs bits de la DCI transmise via le premier PDCCH sont utilisés pour indiquer à l'UE (11, 400) de surveiller, dans le premier créneau suivant les N créneaux suivants, un neuvième PDCCH ayant un même SS que le premier PDCCH ou ayant un SS spécifique ;
un ou plusieurs bits de la DCI transmise via le premier PDCCH sont utilisés pour indiquer à l'UE (11, 400) de surveiller, dans le premier créneau suivant les N créneaux suivants, un dixième PDCCH ayant un même type d'espace de recherche, SS, que le premier PDCCH ou ayant un type d'espace de recherche spécifique ; et
le ou les bits de la DCI transmise via le premier PDCCH sont utilisés pour indiquer à l'UE (11, 400) de surveiller, dans le premier créneau suivant les N créneaux suivants, un onzième PDCCH ayant un même ensemble de ressources de commande, CORESET, que le premier PDCCH ou ayant un CORESET spécifique,
dans lequel N est un entier supérieur ou égal à 1.

10. Un équipement utilisateur, UE (11, 400), comprenant :
un module d'acquisition (401) configuré pour acquérir un ou plusieurs bits dans une DCI transmise via un premier PDCCH surveillé par l'UE (11, 400), le ou les bits de la DCI du premier PDCCH indiquant un PDCCH à ne pas surveiller et/ou un PDCCH à surveiller ; et
un module de détermination (402) configuré pour déterminer le PDCCH à ne pas surveiller et/ou le PDCCH à surveiller conformément au ou aux bits de la DCI du premier PDCCH,
l'UE (11, 400) est **caractérisé en ce que**
le ou les bits de la DCI transmise via le premier PDCCH sont utilisés pour indiquer le PDCCH à ne pas surveiller dans au moins l'un des cas suivants :
le ou les bits de la DCI transmise via le premier PDCCH sont utilisés pour indiquer à l'UE (11, 400) de ne pas surveiller, dans les N créneaux suivants, un deuxième PDCCH ayant un même format de DCI que le premier PDCCH ou ayant un format de DCI spécifique ;
le ou les bits de la DCI transmise via le premier PDCCH sont utilisés pour indiquer à l'UE (11, 400) de ne pas surveiller, dans les N créneaux suivants, un troisième PDCCH ayant une même identité temporaire de réseau radio, RNTI, que le premier PDCCH ou ayant une RNTI spécifique ;
le ou les bits de la DCI transmise via le premier PDCCH sont utilisés pour indiquer à l'UE (11, 400) de ne pas surveiller, dans les N créneaux suivants, un quatrième PDCCH ayant un même espace de recherche, SS, que le premier PDCCH ou ayant un SS spécifique ;
le ou les bits de la DCI transmise via le premier PDCCH sont utilisés pour indiquer à l'UE (11, 400) de ne pas surveiller, dans les N créneaux suivants, un cinquième PDCCH ayant un même type d'espace de recherche que le premier PDCCH ou ayant un type d'espace de recherche spécifique ; et
le ou les bits de la DCI transmise via le premier PDCCH sont utilisés pour indiquer à l'UE (11, 400) de ne pas surveiller, dans les N créneaux suivants, un sixième PDCCH ayant un même ensemble de ressources de commande, CORESET, que le premier PDCCH ou ayant un CORESET spécifique,
dans lequel N est un entier supérieur ou égal à 1 ;
dans lequel le ou les bits de la DCI transmise via le premier PDCCH sont utilisés pour indiquer le PDCCH à surveiller dans au moins l'un des cas suivants :
le ou les bits de la DCI transmise via le premier PDCCH sont utilisés pour indiquer à l'UE (11, 400) de surveiller, dans un premier créneau suivant les N créneaux suivants, un septième PDCCH ayant un même format de DCI que le premier PDCCH ou ayant un format de DCI spécifique ;
le ou les bits de la DCI transmise via le premier PDCCH sont utilisés pour indiquer à l'UE (11, 400) de surveiller, dans le premier créneau suivant les N créneaux suivants, un huitième PDCCH ayant une même identité temporaire de réseau radio, RNTI, que le premier PDCCH ou ayant une RNTI spécifique ;
le ou les bits de la DCI transmise via le premier PDCCH sont utilisés pour indiquer à l'UE (11, 400) de surveiller, dans le premier créneau suivant les N créneaux suivants, un neuvième PDCCH ayant un même espace de recherche, SS, que le premier PDCCH ou ayant un SS spécifique ;
le ou les bits de la DCI transmise via le premier PDCCH sont utilisés pour indiquer à l'UE (11, 400) de surveiller, dans le premier créneau suivant les N créneaux suivants, un dixième PDCCH ayant un même type d'espace de recherche que le premier PDCCH ou ayant un type d'espace de recherche spécifique ; et
le ou les bits de la DCI transmise via le premier PDCCH sont utilisés pour indiquer à l'UE (11, 400) de surveiller, dans le premier créneau suivant les N créneaux suivants, un onzième PDCCH ayant un même ensemble de ressources de commande, CORESET, que le premier PDCCH ou ayant un CORESET spécifique,
dans lequel N est un entier supérieur ou égal à 1.

11. L'UE (11, 400) selon la revendication 10, dans lequel l'UE (11, 400) est en outre configuré pour :
recevoir des informations d'indication d'un dispositif côté réseau (10, 500), dans lequel les informations d'indication sont utilisées pour indiquer à l'UE (11, 400) de surveiller le premier PDCCH ou indiquer que le premier PDCCH a été configuré par le dispositif côté réseau (10, 500) pour l'UE (11, 400), ou les informations d'indication sont utilisées pour indiquer à l'UE (11, 400) de ne pas surveiller le premier PDCCH ou indiquer que le premier PDCCH n'a pas été configuré par le dispositif côté réseau (10, 500) pour l'UE (11, 400).

12. L'UE (11, 400) selon la revendication 10, dans lequel le ou les bits de la DCI transmise via le premier PDCCH sont utilisés pour indiquer à l'UE (11, 400) de ne pas surveiller, dans les N créneaux suivants, le deuxième PDCCH ayant le même format de DCI que le premier PDCCH ou ayant le format de DCI spécifique dans au moins l'un des cas suivants :
le ou les bits de la DCI dans un premier format de DCI ou un deuxième format de DCI transmise via le premier PDCCH sont utilisés pour indiquer à l'UE (11, 400) de ne pas surveiller, dans les N créneaux suivants, le deuxième PDCCH ayant le premier format de DCI ou le deuxième format de DCI ;
le ou les bits de la DCI dans le premier format de DCI ou un troisième format de DCI transmise via le premier PDCCH sont utilisés pour indiquer à l'UE (11, 400) de ne pas surveiller, dans les N créneaux suivants, le deuxième PDCCH ayant le premier format de DCI ou le troisième format de DCI ;
le ou les bits de la DCI dans le deuxième format de DCI ou un quatrième format de DCI transmise via le premier PDCCH sont utilisés pour indiquer à l'UE (11, 400) de ne pas surveiller, dans les N créneaux suivants, le deuxième PDCCH ayant le deuxième format de DCI ou le quatrième format de DCI ;
le ou les bits de la DCI dans le deuxième format de DCI ou le quatrième format de DCI transmise via le premier PDCCH sont utilisés pour indiquer à l'UE (11, 400) de ne pas surveiller, dans les N créneaux suivants, le deuxième PDCCH ayant le premier format de DCI ou le troisième format de DCI ;
le ou les bits de la DCI dans le premier format de DCI ou le troisième format de DCI transmise via le premier PDCCH sont utilisés pour indiquer à l'UE (11, 400) de ne pas surveiller, dans les N créneaux suivants, le deuxième PDCCH ayant le deuxième format de DCI ou le quatrième format de DCI ;
le ou les bits de la DCI dans le premier format de DCI, le deuxième format de DCI, le troisième format de DCI ou le quatrième format de DCI transmise via le premier PDCCH sont utilisés pour indiquer à l'UE (11, 400) de ne pas surveiller, dans les N créneaux suivants, le deuxième PDCCH ayant le premier format de DCI, le deuxième format de DCI, le troisième format de DCI ou le quatrième format de DCI ; et
le ou les bits de la DCI dans un cinquième format de DCI transmise via le premier PDCCH sont utilisés pour indiquer à l'UE (11, 400) de ne pas surveiller, dans les N créneaux suivants, le deuxième PDCCH ayant le cinquième format de DCI,
dans lequel le premier format de DCI est utilisé pour ordonnancer des canaux physiques partagés de liaison montante pour une cellule, le deuxième format de DCI est utilisé pour ordonnancer des canaux physiques partagés de liaison descendante pour une cellule, le troisième format de DCI est utilisé pour ordonnancer des canaux physiques partagés de liaison montante pour une cellule, le quatrième format de DCI est utilisé pour ordonnancer des canaux physiques partagés de liaison descendante pour une cellule, et le cinquième format de DCI est utilisé pour notifier un groupe de formats de créneaux de l'UE (11, 400).

13. L'UE (11, 400) selon la revendication 10, dans lequel le ou les bits de la DCI transmise via le premier PDCCH sont utilisés pour indiquer à l'UE (11, 400) de surveiller, dans le premier créneau suivant les N créneaux suivants, le septième PDCCH ayant le même format de DCI que le premier PDCCH ou ayant le format de DCI spécifique dans au moins l'un des cas suivants :
un ou plusieurs bits de la DCI dans un premier format de DCI ou un deuxième format de DCI transmise via le premier PDCCH sont utilisés pour indiquer à l'UE (11, 400) de surveiller, dans le premier créneau suivant les N créneaux suivants, le septième PDCCH ayant le premier format de DCI ou le deuxième format de DCI ;
un ou plusieurs bits de la DCI dans le premier format de DCI ou un troisième format de DCI transmise via le premier PDCCH sont utilisés pour indiquer à l'UE (11, 400) de surveiller, dans le premier créneau suivant les N créneaux suivants, le septième PDCCH ayant le premier format de DCI ou le troisième format de DCI ;
un ou plusieurs bits de la DCI dans le deuxième format de DCI ou un quatrième format de DCI transmise via le premier PDCCH sont utilisés pour indiquer à l'UE (11, 400) de surveiller, dans le premier créneau suivant les N créneaux suivants, le septième PDCCH ayant le deuxième format de DCI ou le quatrième format de DCI ;
un ou plusieurs bits de la DCI dans le deuxième format de DCI ou le quatrième format de DCI transmise via le premier PDCCH sont utilisés pour indiquer à l'UE (11, 400) de surveiller, dans le premier créneau suivant les N créneaux suivants, le septième PDCCH ayant le premier format de DCI ou le troisième format de DCI ;
un ou plusieurs bits de la DCI dans le premier format de DCI ou le troisième format de DCI transmise via le premier PDCCH sont utilisés pour indiquer à l'UE (11, 400) de surveiller, dans le premier créneau suivant les N créneaux suivants, le deuxième PDCCH ayant le deuxième format de DCI ou le quatrième format de DCI ;
un ou plusieurs bits de la DCI dans le premier format de DCI, le deuxième format de DCI, le troisième format de DCI ou le quatrième format de DCI transmise via le premier PDCCH sont utilisés pour indiquer à l'UE (11, 400) de surveiller, dans le premier créneau suivant les N créneaux suivants, le septième PDCCH ayant le premier format de DCI, le deuxième format de DCI, le troisième format de DCI ou le quatrième format de DCI ; et
un ou plusieurs bits de la DCI dans un cinquième format de DCI transmise via le premier PDCCH sont utilisés pour indiquer à l'UE (11, 400) de surveiller, dans le premier créneau suivant les N créneaux suivants, le septième PDCCH ayant le cinquième format de DCI,
dans lequel le premier format de DCI est utilisé pour ordonnancer des canaux physiques partagés de liaison montante pour une cellule, le deuxième format de DCI est utilisé pour ordonnancer des canaux physiques partagés de liaison descendante pour une cellule, le troisième format de DCI est utilisé pour ordonnancer des canaux physiques partagés de liaison montante pour une cellule, le quatrième format de DCI est utilisé pour ordonnancer des canaux physiques partagés de liaison descendante pour une cellule, et le cinquième format de DCI est utilisé pour notifier un groupe de formats de créneaux de l'UE (11, 400).

14. L'UE (11, 400) selon la revendication 10, dans lequel un ou plusieurs bits de la DCI transmise via le premier PDCCH sont utilisés pour indiquer à l'UE (11, 400) de ne pas surveiller, dans les N créneaux suivants, le cinquième PDCCH ayant le même type d'espace de recherche que le premier PDCCH ou ayant le type d'espace de recherche spécifique dans au moins l'un des cas suivants :
un ou plusieurs bits de la DCI transmise via le premier PDCCH ayant un premier type d'espace de recherche commun sont utilisés pour indiquer à l'UE (11, 400) de ne pas surveiller, dans les N créneaux suivants, le cinquième PDCCH ayant le premier type d'espace de recherche commun ;
un ou plusieurs bits de la DCI transmise via le premier PDCCH ayant un deuxième type d'espace de recherche commun sont utilisés pour indiquer à l'UE (11, 400) de ne pas surveiller, dans les N créneaux suivants, le cinquième PDCCH ayant le deuxième type d'espace de recherche commun ;
un ou plusieurs bits de la DCI transmise via le premier PDCCH ayant un troisième type d'espace de recherche commun sont utilisés pour indiquer à l'UE (11, 400) de ne pas surveiller, dans les N créneaux suivants, le cinquième PDCCH ayant le troisième type d'espace de recherche commun ;
un ou plusieurs bits de la DCI transmise via le premier PDCCH ayant un quatrième type d'espace de recherche commun sont utilisés pour indiquer à l'UE (11, 400) de ne pas surveiller, dans les N créneaux suivants, le cinquième PDCCH ayant le quatrième type d'espace de recherche commun ;
un ou plusieurs bits de la DCI transmise via le premier PDCCH ayant un espace de recherche spécifique à l'UE, UE SS, sont utilisés pour indiquer à l'UE (11, 400) de ne pas surveiller, dans les N créneaux suivants, le cinquième PDCCH ayant le type d'espace de recherche UE SS ; et un ou plusieurs bits de la DCI transmise via le premier PDCCH ayant le premier type d'espace de recherche sont utilisés pour indiquer à l'UE (11, 400) de ne pas surveiller, dans les N créneaux suivants, le cinquième PDCCH ayant le deuxième type d'espace de recherche.

15. Un dispositif côté réseau (10, 500), comprenant :
un module de configuration (501) configuré pour configurer un ou plusieurs bits dans une DCI transmise via un premier PDCCH, les un ou plusieurs bits dans la DCI du premier PDCCH indiquant un PDCCH à ne pas surveiller par un UE (11, 400) et/ou un PDCCH à surveiller par l'UE (11, 400),
le dispositif côté réseau (10, 500) est **caractérisé par**
dans lequel un ou plusieurs bits de la DCI transmise via le premier PDCCH sont utilisés pour indiquer le PDCCH à ne pas surveiller dans au moins l'un des cas suivants :
un ou plusieurs bits de la DCI transmise via le premier PDCCH sont utilisés pour indiquer à l'UE (11, 400) de ne pas surveiller, dans les N créneaux suivants, un deuxième PDCCH ayant un même format de DCI que le premier PDCCH ou ayant un format de DCI spécifique ;
un ou plusieurs bits de la DCI transmise via le premier PDCCH sont utilisés pour indiquer à l'UE (11, 400) de ne pas surveiller, dans les N créneaux suivants, un troisième PDCCH ayant une même identité temporaire de réseau radio, RNTI, que le premier PDCCH ou ayant une RNTI spécifique ;
un ou plusieurs bits de la DCI transmise via le premier PDCCH sont utilisés pour indiquer à l'UE (11, 400) de ne pas surveiller, dans les N créneaux suivants, un quatrième PDCCH ayant un même espace de recherche, SS, que le premier PDCCH ou ayant un SS spécifique ;
un ou plusieurs bits de la DCI transmise via le premier PDCCH sont utilisés pour indiquer à l'UE (11, 400) de ne pas surveiller, dans les N créneaux suivants, un cinquième PDCCH ayant un même type d'espace de recherche que le premier PDCCH ou ayant un type d'espace de recherche spécifique ; et
un ou plusieurs bits de la DCI transmise via le premier PDCCH sont utilisés pour indiquer à l'UE (11, 400) de ne pas surveiller, dans les N créneaux suivants, un sixième PDCCH ayant un même ensemble de ressources de commande, CORESET, que le premier PDCCH ou ayant un CORESET spécifique,
dans lequel N est un entier supérieur ou égal à 1 ;
dans lequel un ou plusieurs bits de la DCI transmise via le premier PDCCH sont utilisés pour indiquer le PDCCH à surveiller dans au moins l'un des cas suivants :
un ou plusieurs bits de la DCI transmise via le premier PDCCH sont utilisés pour indiquer à l'UE (11, 400) de surveiller, dans un premier créneau suivant les N créneaux suivants, un septième PDCCH ayant un même format de DCI que le premier PDCCH ou ayant un format de DCI spécifique ;
un ou plusieurs bits de la DCI transmise via le premier PDCCH sont utilisés pour indiquer à l'UE (11, 400) de surveiller, dans le premier créneau suivant les N créneaux suivants, un huitième PDCCH ayant une même identité temporaire de réseau radio, RNTI, que le premier PDCCH ou ayant une RNTI spécifique ;
un ou plusieurs bits de la DCI transmise via le premier PDCCH sont utilisés pour indiquer à l'UE (11, 400) de surveiller, dans le premier créneau suivant les N créneaux suivants, un neuvième PDCCH ayant un même espace de recherche, SS, que le premier PDCCH ou ayant un SS spécifique ;
un ou plusieurs bits de la DCI transmise via le premier PDCCH sont utilisés pour indiquer à l'UE (11, 400) de surveiller, dans le premier créneau suivant les N créneaux suivants, un dixième PDCCH ayant un même type d'espace de recherche que le premier PDCCH ou ayant un type d'espace de recherche spécifique ; et
un ou plusieurs bits de la DCI transmise via le premier PDCCH sont utilisés pour indiquer à l'UE (11, 400) de surveiller, dans le premier créneau suivant les N créneaux suivants, un onzième PDCCH ayant un même ensemble de ressources de commande, CORESET, que le premier PDCCH ou ayant un CORESET spécifique,
dans lequel N est un entier supérieur ou égal à 1.
